# EUROPÄISCHE PATENTSCHRIFT

(11) **EP 3 303 032 B1**
(45) Veröffentlichungstag und Bekanntmachung des Hinweises auf die Patenterteilung: **19.09.2018**
(21) Anmeldenummer: 16726065.2
(22) Anmeldetag: 24.05.2016
(51) Int. Cl.: B60H 1/34

(54) **LUFTAUSSTRÖMER MIT EINER STEUEREINRICHTUNG**
AIR VENT HAVING A CONTROL DEVICE
DIFFUSEUR D'AIR COMPRENANT UN DISPOSITIF DE COMMANDE

(30) Priorität: 28.05.2015 DE 102015108434; 29.10.2015 DE 102015118548
(43) Veröffentlichungstag der Anmeldung: 11.04.2018
(73) Patentinhaber: Dr. Schneider Kunststoffwerke GmbH, 96317 Kronach-Neuses (DE)
(72) Erfinder: GAREIS, Jenny, 96346 Wallenfels (DE); HORNER, Dominic, 96317 Kronach (DE); SEEMANN, Jürgen, 96317 Kronach (DE)
(86) Internationale Anmeldenummer: PCT/EP2016/061682
(87) Internationale Veröffentlichungsnummer: WO 2016/188993

(56) Entgegenhaltungen:
- EP-A2- 1 712 384
- DE-A1-102011 050 435
- DE-U1-202012 100 243
- DE-U1-202012 100 980

## Beschreibung

Es wird ein Luftausströmer mit einer Steuereinrichtung zum Steuern der Richtung und der Menge der aus einem Luftausströmer ausströmenden Luft beschrieben. Insbesondere wird ein Luftausströmer mit einer Steuereinrichtung beschrieben, welche als sogenannte Einknopfbedienung ausgebildet ist. Der Luftausströmer weist mindestens eine verschwenkbar in einem Gehäuse gelagerte Steuerlamelle und orthogonal zur Steuerlamelle verlaufende und schwenkbar im Gehäuse gelagerte zweite Lamellen auf, wobei über die Steuerlamelle und die zweiten Lamellen die Richtung des aus dem Gehäuse austretenden Luftstroms und über die zweiten Lamellen zusätzlich die Menge der ausströmenden Luft einstellbar sind.

Aus dem Stand der Technik sind verschiedene Einrichtungen zum Steuern eines Luftstroms bekannt, wobei über hinter einer Steuerlamelle angeordnete Vertikallamellen sowohl die Richtung der ausströmenden Luft als auch die Menge der ausströmenden Luft einstellbar ist.

DE 10 2013 100 534 A1 offenbart eine Einrichtung zum Steuern eines Luftstroms, wobei eine als Steuerlamelle ausgebildete vordere Horizontallamelle eine Aufnahme aufweist, in der ein kreisförmiges Bedienelement aufgenommen ist. Über das Bedienelement kann durch eine Drehbewegung eine Änderung der Ausrichtung von Vertikallamellen erfolgen. Die Vertikallamellen können über das Bedienelement so weit verschwenkt werden, dass sie den Luftstrom durch den Luftausströmer unterbinden.

Aus DE 20 2012 100 980 U1 ist eine Einrichtung zum Steuern eines Luftstroms offenbart. Die Einrichtung besitzt mindestens eine erste Steuerlamelle und orthogonal zur ersten Steuerlamelle gelagerte zweite Lamellen. Es ist weiterhin ein Bedienelement vorhanden, mittels dem die Ausrichtung der mindestens einen ersten Lamelle und der zweiten Lamellen ermöglicht ist.

DE 298 14 953 U1 offenbart eine Frischluftdüsen-Einrichtung für ein Kraftfahrzeug, wobei ebenfalls über die Vertikallamellen die Steuerung der Menge der ausströmenden Luft einstellbar ist. Zum Verschwenken oder Schwenken oder Schwenken der Lamellen sind außerhalb des Gehäuses angeordnete Verstelleinrichtungen in Form von Bedienrädern vorgesehen.

Die aus dem Stand der Technik bekannten Einrichtungen weisen jedoch den Nachteil auf, dass über die hinteren Vertikallamellen nur ein unzureichendes Verschließen des Luftzuführschachts möglich ist. Insbesondere ist es bei Einrichtungen zum Steuern eines Luftstroms mit Bedienelementen, die im Bereich der Lamellen angeordnet sind, nicht möglich, über die Bedienelemente eine ausreichende Kraft auf die hinteren Vertikallamellen zu übertragen, die ein abdichtendes Verschließen ermöglicht. Zudem weisen die aus dem Stand der Technik bekannten Einrichtungen mit im Wesentlichen mittig angeordneten Bedienelementen den Nachteil auf, dass diese eine Vielzahl von Komponenten umfassen, die in den Strömungskanal des Luftausströmers ragen und damit eine zusätzliche aber ungewünschte Ablenkung der Luft bewirken. Ein abdichtendes Verschließen ist im Stand der Technik trotz Dichtungsmitteln oftmals auch deshalb nicht möglich, da die Bestandteile der Luftausströmer Abweichungen in ihren Maßen (Toleranzen) aufweisen und bei einer oftmaligen Betätigung das Spiel der Komponenten auch noch zunimmt.

Es ist daher Aufgabe, eine Einrichtung zum Steuern eines Luftstroms anzugeben, welche die Nachteile des Stands der Technik behebt und eine kostengünstige, einfache und sichere Steuerung der Luftausströmrichtung und der Menge der ausströmenden Luft bereitstellt.

Die Aufgabe wird durch einen Luftausströmer mit den in Anspruch 1 angegebenen technischen Merkmalen gelöst. Vorteilhafte Weiterbildungen sind in den Unteransprüchen angegeben.

Bei einem die vorstehend genannte Aufgabe lösenden Luftausströmer mit einer Einrichtung zum Steuern eines Luftstroms, mit mindestens einer verschwenkbar in einem Gehäuse gelagerten ersten Steuerlamelle und mit orthogonal zur ersten Steuerlamelle verlaufenden und verschwenkbar im Gehäuse gelagerten zweiten Lamellen, wobei über die erste Steuerlamelle und die zweiten Lamellen die Richtung des aus dem Gehäuse austretenden Luftstroms und über die zweiten Lamellen die Menge der ausströmenden Luft einstellbar sind, und mit einem Bedienelement, das in einem Luftaustrittsbereich des Gehäuses angeordnet ist,
- ist das Bedienelement um eine parallel zur Schwenkachse der zweiten Lamellen verlaufende Achse verschwenkbar gelagert und mit einem ersten Verstellelement und mit der ersten Steuerlamelle gekoppelt,
- weist das erste Verstellelement ein Zahnsegment auf, das mit einem drehbar am Gehäuse gelagerten ersten Zahnrad in Eingriff steht,
- steht das erste Zahnrad mit einem zweiten Verstellelement in Eingriff, das an einer zweiten Steuerlamelle der zweiten Lamellen angeordnet ist,
- ist die zweite Steuerlamelle über mindestens eine Verbindungsstange mit den anderen zweiten Lamellen gekoppelt, und
- ist das erste Zahnrad gefedert ausgebildet.

Der Luftausströmer kann beispielsweise in einem Armaturenbrett oder einer anderen Stelle in einem Kraftfahrzeug angeordnet sein. Dem Luftausströmer kann Frischluft oder Luft von einer Klimaanlage über Luftkanäle zugeführt werden, wobei über das Bedienelement gesteuert wird, wie viel und in welcher Richtung die zugeführte Luft aus dem Luftaustrittsbereich ausströmt. Bei dem hierin beschriebenen Luftausströmer ist keine separate Schließklappe vorgesehen, sondern der Luftstrom wird über die zweiten Lamellen teilweise oder vollständig unterbrochen. Wird ein Ausströmer über die hinteren Lamellen statt über eine Schließklappe geschlossen, fällt bei den aus dem Stand der Technik bekannten Ausströmern auf, dass die Lamellen, die durch einen Mitnehmer gezogen werden, nicht komplett abdichten. Hierfür sind mitunter auch die Toleranzen bei den Bauteilen verantwortlich. Durch die gefederte Ausbildung des ersten Zahnrads und der gefederten Ausbildung der Koppelstange können die zweiten Lamellen mittels Druck in ihre Endposition verbracht werden, in der ein Luftkanal des Luftausströmers verschlossen ist, so dass ein abdichtendes Verschließen eines Luftkanals, der sich durch das Gehäuse des Luftausströmers hindurch erstreckt, erreicht wird. Die gefederte Ausbildung des ersten Zahnrads und der Koppelstange erlaubt es Toleranzen auszugleichen. Hierdurch wird ein deutlich verbessertes Abdichten erreicht, so dass im Wesentlichen keine Leckluftströme auftreten, d.h. der Luftkanal im Gehäuse vollständig verschlossen ist.

Ein gefedertes Zahnrad ermöglicht es Energie zu speichern und weiter einen Druck auf die zweiten Lamellen in ihrer Endposition auszuüben, sodass diese in ihrer abdichtenden Schließstellung verbleiben, selbst dann wenn keine Bedienkraft mehr über das Bedienelement aufgebracht wird. Darüber hinaus gleicht die gefederte Ausführung des ersten Zahnrads Toleranzen der einzelnen Komponenten des Luftausströmers aus. So kann auch bei Abweichungen in den Maßen der einzelnen Komponenten ein vollständiges Verschließen des Luftkanals durch die zweiten Lamellen erreicht werden, da die mindestens eine Verbindungsstange aufgrund der gefederten Ausführung des ersten Zahnrads weiter verschoben werden kann, als dies ohne Federung möglich wäre. Die Herstellungskosten des Luftausströmers lassen sich hierdurch erheblich reduzieren.

Das Bedienelement ist an der Vorderseite des Luftausströmers angeordnet und kann einen Knopf aufweisen, der zur Ansteuerung des Luftausströmers durch Auf-/Abbewegung die erste Steuerlamelle schwenkt und durch ein Schwenken in einer orthogonal zur Auf-/Abbewegung sich erstreckenden Richtung ein Verschwenken oder Schwenken oder Schwenken der zweiten Lamellen bewirkt.

Die erste Steuerlamelle kann eine vertikal verlaufende Lamelle oder eine horizontal verlaufende Lamelle sein. Die Anordnung der Einrichtung und der einzelnen Komponenten in horizontaler oder vertikaler Richtung kann beliebig vorgenommen werden. Der Luftausströmer kann eine deutlich größere Breite oder Höhe als Höhe oder Breite aufweisen. Solche Luftausströmer werden auch als Breitbandausströmer bezeichnet, wobei die Länge der ersten Steuerlamelle bspw. in einem Bereich zwischen 100mm und 400mm liegt.

In weiteren Ausführungsformen weist das Bedienelement ein erstes Bedienteil und ein zweites Bedienteil auf, wobei das erste Bedienteil um eine parallel zur Längsachse der ersten Steuerlamelle verlaufende erste Achse schwenkbar an einem Lagersteg gelagert und das zweite Bedienteil um eine orthogonal zur ersten Achse verlaufende zweite Achse in dem ersten Bedienteil gelagert ist. In dieser Ausführung sind die wesentlichen Komponenten zum Verschwenken oder Schwenken oder Schwenken der Lamellen im Bereich des Lagersteges angeordnet und nicht an der ersten Steuerlamelle. Dies bewirkt einerseits keine Ablenkung des Luftstroms durch Bauteile an der ersten Steuerlamelle und verhindert zudem auch ein Durchbiegen der ersten Steuerlamelle, da kein Druck auf die erste Steuerlamelle über Bedienelemente aufgebracht wird. Das erste Bedienteil stützt sich an dem Lagersteg ab und kann um die erste Achse verschwenkt werden. Wird das erste Bedienteil um die erste Achse verschwenkt, erfolgt ein Verschwenken oder Schwenken oder Schwenken der ersten Steuerlamelle. Das zweite Bedienteil ist innerhalb des ersten Bedienteils um die zweite Achse orthogonal zur ersten Achse verdrehbar gelagert und ermöglicht ein Verschwenken oder Schwenken oder Schwenken der zweiten Lamelle. Dabei wird eine sogenannte Einknopfbedienung bereitgestellt, wobei über zwei Bewegungsabläufe drei Funktionen bereitgestellt werden. Zum einen ist es möglich einen Luftstrom beispielsweise nach oben oder unten durch Verschwenken oder Schwenken oder Schwenken der ersten Steuerlamelle zu verändern und über ein Verschwenken oder Schwenken oder Schwenken des zweiten Bedienteils ein seitliches Verschwenken oder Schwenken oder Schwenken der zweiten Lamellen zu realisieren. Werden die zweiten Lamellen über das zweite Bedienteil in ihre Endposition verschwenkt, so verschließen die zweiten Lamellen vollständig den Luftkanal durch das Gehäuse. In dieser Ausführung kann auf zusätzliche Mittel zum Versteifen oder Stützen der ersten Steuerlamelle verzichtet werden. Insbesondere ist diese Ausführung bei sehr breiten Luftausströmern (Breitbandausströmern) vorteilhaft, da ein Durchbiegen einer sehr langen ersten Steuerlamelle verhindert wird.

Bei der vorstehend genannten Ausführung kann das erste Verstellelement einen sich orthogonal zum Zahnsegment und entlang der zweiten Achse erstreckenden Abschnitt aufweisen, um den das erste Verstellelement drehbar im Gehäuse gelagert ist und der von einem ersten Steuerabschnitt des zweiten Bedienteils umgeben ist. Das Verschwenken oder Schwenken oder Schwenken des zweiten Bedienteils wird in eine Rotationsbewegung des ersten Verstellelementes übertragen. Das Verschwenken oder Schwenken oder Schwenken des ersten Verstellelementes bewirkt ein Verdrehen oder Drehen oder Drehen des ersten Zahnrads und damit ein Verdrehen oder Drehen oder Drehen des zweiten Verstellelementes.

Ferner kann in den vorstehend genannten Ausführungen das zweite Verstellelement mindestens einen Zahnsegmentabschnitt und zwei exzentrisch zur Schwenkachse der zweiten Steuerlamelle angeordnete und gegenüberliegende Koppelelemente aufweisen, wobei die Koppelelemente jeweils mit einer Koppelstange und die Koppelstangen jeweils mit einer Gruppe von zweiten Lamellen verbunden sind. Durch die exzentrische Anordnung der Koppelelemente wird die Drehbewegung des zweiten Verstellelementes in eine im Wesentlichen longitudinale Bewegung der Koppelstangen übersetzt. Die Koppelstangen können dabei jedoch eine gewisse Ausgleichsbewegung orthogonal zur Verschiebebewegung ausführen. Über die exzentrische Anordnung der Koppelelemente an dem zweiten Verstellelement werden die Koppelstangen nicht nur verschoben, sondern werden die zweiten Lamellen stets mittels Druck in ihre Endposition zum Verschließen des Luftkanals des Gehäuses gebracht.

In einer weiteren Ausbildung der vorstehend genannten Varianten können die Koppelstangen gekröpfte Abschnitte aufweisen, über welche die Koppelstangen mit den zweiten Lamellen verbunden sind. Hierüber wird das Drücken der zweiten Lamellen in ihre Endposition weiter verbessert. Zudem können die gekröpften Abschnitte als Federung beim Verbringen der zweiten Lamellen in ihre Endposition dienen. Werden die zweiten Lamellen beispielsweise mit hohem Druck in ihre Endposition verbracht, so kann ein übermäßiger Druck, der zu einer Zerstörung der Koppelstangen führen könnte, über die gekröpften Abschnitte kompensiert werden. Zudem kann in den gekröpften Abschnitten die Bewegungsenergie zum Verlagern der zweiten Lamellen gespeichert werden, sodass der Druck auf die zweiten Lamellen in deren Endpositionen weiter aufrechterhalten wird.

Vorteilhafterweise sind die wesentlichen Komponenten wie beispielsweise das erste Zahnrad, das erste Verstellelement und das zweite Verstellelement außerhalb des Gehäuses, d. h. nicht im Luftkanal des Luftausströmers, angeordnet, sodass eine Verwirbelung durch Komponenten zum Verschwenken oder Schwenken oder Schwenken von Lamellen verhindert wird. Ferner ergibt sich durch die Übertragung der Schwenkbewegung des zweiten Bedienteils in eine Drehbewegung eine genauere Verstellmöglichkeit der zweiten Lamellen sowie ein höherer Druck auf die zweiten Lamellen zum Verschwenken oder Schwenken oder Schwenken. Der Druck auf die Lamellen kann durch die Übersetzung zwischen den Zahnsegmenten und dem Zahnrad sowie durch den Abstand der Koppelelemente, die exzentrisch am zweiten Verstellelement angeordnet sind, zur Drehachse des zweiten Verstellelementes bestimmt werden. Die vorstehend beschriebenen Ausführungen weisen dabei einen sehr einfachen Aufbau auf und ermöglichen auf zuverlässige Art und Weise das Erfüllen von drei Bedienfunktionen, nämlich das Ausrichten eines Luftstroms sowohl in einer vertikalen als auch in einer horizontalen Richtung sowie die Steuerung der Menge der austretenden Luft. Bei den hierin beschriebenen Ausführungen können zudem Toleranzen der einzelnen Bauteile kompensiert werden. Die Kompensation von Toleranzen wird vor allem durch die gefederte Ausbildung des ersten Zahnrads und auch durch die gefederte Ausführung der Koppelstangen über die gekröpften Abschnitte erreicht. Zudem wird eine Bewegungsübertragung in einem sehr geringen Bauraum erreicht. Dies wirkt sich insbesondere positiv auf den zum Einbau des Luftausströmers benötigten Bauraum aus, als auch auf die Kosten für den Luftausströmer sowie das Gewicht des Luftausströmers.

In weiteren alternativen Ausführungsformen zu den vorstehend beschriebenen Luftausströmern kann das Bedienelement ein erstes Bedienteil und ein zweites Bedienteil aufweisen, wobei das erste Bedienteil um eine parallel zur Längsachse der ersten Steuerlamelle verlaufende erste Achse verschwenkbar in dem zweiten Bedienteil gelagert und das zweite Bedienteil um eine orthogonal zur ersten Achse verlaufende zweite Achse verschwenkbar an dem Gehäuse gelagert sind. Auch bei diesen Ausführungen wird ein Durchbiegen der ersten Steuerlamelle verhindert, da kein Druck auf die erste Steuerlamelle über die Bedienteile aufgebracht wird. Über das erste Bedienteil wird lediglich eine Bedienkraft zum Verschwenken oder Schwenken oder Schwenken der ersten Steuerlamelle aufgebracht. Da die erste Steuerlamelle über das erste Bedienteil und dessen Lagerung innerhalb des zweiten Bedienteils am Gehäuse abgestützt ist, erfolgt kein Durchbiegen. Deshalb kann die Ausführung des Luftausströmers auch bei sogenannten Breitbandausströmern verwendet werden, wobei die erste Steuerlamelle eine Länge von über 150 mm aufweist. Analog zu den vorstehend beschriebenen Varianten erfolgt ein Verschwenken oder Schwenken oder Schwenken der ersten Steuerlamelle durch Verschwenken oder Schwenken oder Schwenken des ersten Bedienteils um die erste Achse und ein Verschwenken oder Schwenken oder Schwenken der zweiten Lamellen durch Verdrehen oder Drehen des zweiten Bedienteils um die zweite Achse. Hierzu wird beispielsweise ein Bedienknopf, der fest mit dem ersten Bedienteil verbunden ist, in die Richtung gedrückt, in welche die zweiten Lamellen verschwenkt werden sollen. Wird der Bedienknopf über ein bestimmtes Maß hinaus in eine Richtung gedrückt, welcher der Endposition der zweiten Lamellen entspricht, so erfolgt ein Verschließen des Luftkanals des Luftausströmers über diese zweiten Lamellen.

Das erste Bedienteil kann bei der vorstehend genannten Ausführung über eine Feder in einer Aufnahme in dem zweiten Bedienteil verschwenkbar gelagert sein. Die Feder kann vorzugsweise als Metallfeder ausgebildet sein. Die Feder stellt sicher, dass ein bestimmtes Mindestmaß an Kraft (Bedienkraft) aufgebracht werden muss, um ein Verschwenken oder Schwenken oder Schwenken der ersten Steuerlamelle zu bewirken. Ohne eine solche Feder würde das Verschwenken oder Schwenken oder Schwenken der ersten Steuerlamelle zu leichtgängig erfolgen und könnte unbeabsichtigt durchgeführt werden. Zudem ist es oftmals schwierig eine exakte Position für die erste Steuerlamelle zu finden, wenn das Verschwenken oder Schwenken zu leichtgängig möglich ist. Die Feder in der Aufnahme des zweiten Bedienteils übt einen Druck auf das erste Bedienteil bzw. einen Bereich oder ein Element des ersten Bedienteils aus, sodass zum Verschwenken oder Schwenken des ersten Bedienteils die Federkraft überwunden werden muss. Dadurch ist es möglich auch sehr feine Einstellungen vorzunehmen. Alternativ zu einer Feder könnte auch eine entsprechende Beschichtung in der Aufnahme oder an dem ersten Bedienteil vorgesehen sein, sodass die Reibung zwischen dem ersten Bedienteil und der Aufnahme des zweiten Bedienteils das Verschwenken oder Schwenken des ersten Bedienteils hemmt.

In weiteren Varianten der vorstehend beschriebenen Ausführung kann das erste Verstellelement mit dem zweiten Bedienteil verbunden sind und das erste Bedienteil einen zweiten Steuerabschnitt aufweisen, der mit der ersten Steuerlamelle gekoppelt ist. Der zweite Steuerabschnitt kann dabei eine Steuerwelle oder einen entsprechenden Abschnitt der ersten Steuerlamelle umgreifen. Wird das erste Bedienteil verschwenkt, so bewirkt dies ein gegenläufiges Verschwenken oder Schwenken der ersten Steuerlamelle. Dabei greift das erste Bedienteil über den zweiten Steuerabschnitt an einem Bereich oder der Steuerwelle der ersten Steuerlamelle an, welche nicht durch die Schwenkachse der ersten Steuerlamelle verlaufen.

In weiteren Varianten der vorstehend beschriebenen Ausführungsformen ist das zweite Verstellelement ein mit der zweiten Steuerlamelle verbundenes zweites Zahnrad, das mit dem ersten Zahnrad in Eingriff steht, wobei die zweiten Lamellen jeweils mit einem dritten Zahnrad verbunden sind, deren Drehachse die Schwenkachse der zweiten Lamellen ist und wobei die dritten Zahnräder mit dem zweiten Zahnrad über eine Zahnstange gekoppelt sind. Wird das zweite Bedienteil beispielsweise durch ein Drücken des ersten Bedienteils verschwenkt, so erfolgt über die Verbindung des ersten Verstellelementes mit dem zweiten Bedienteil ein Verschwenken oder Schwenken des ersten Verstellelementes und damit ein Verdrehen oder Drehen des ersten Zahnrads. Das erste Zahnrad kämmt mit dem zweiten Zahnrad, sodass die zweite Steuerlamelle entsprechend verdreht wird. Die Schwenkachse der zweiten Steuerlamelle entspricht dabei ebenso der Drehachse des zweiten Zahnrads. Das zweite Zahnrad weist beispielsweise eine Höhe auf, die größer ist als die Höhe des ersten Zahnrads. Dabei kann das zweite Zahnrad sowohl mit dem ersten Zahnrad als auch mit einem Zahnradabschnitt der Zahnstange in einem gleichen Abschnitt kämmen. Wird nunmehr das zweite Zahnrad verdreht, so erfolgt eine Verlagerung der Zahnstange, wobei die Zähne der Zahnstange mit den dritten Zahnrädern an den zweiten Lamellen kämmen. Hierüber erfolgt ein entsprechendes Verschwenken oder Schwenken der zweiten Lamellen. Die Zahnstange kann aber auch an einer dem ersten Zahnrad gegenüberliegenden Seite angeordnet sein und mit dem zweiten Zahnrad und den dritten Zahnrädern in Eingriff stehen. Ausschnitte in der Zahnstange erzeugen federnde Wirkung zum Toleranzausgleich. Drehmoment wird direkt auf die Lagerachse der Lamelle übertragen anstatt über einen Hebel. Es ist nur eine Zahnstange im Vergleich zu zwei Koppelstangen nötig.

Das erste Bedienteil ist in einer Aufnahme des zweiten Bedienteils verschwenkbar gelagert, wobei die Aufnahme Rastelemente aufweisen kann. In Abhängigkeit der Anzahl der Rastelemente können somit verschiedene Stellungen der ersten Steuerlamelle vorgegeben und haptisch wahrnehmbar sein. Wird nun das zweite Bedienteil durch ein seitliches Drücken gegen das erste Bedienteil verschwenkt, so verhindern die Rastelemente, dass das erste Bedienteil abrutschen kann, d.h. unabsichtlich verschwenkt wird. Bei einem Verdrehen oder Drehen bzw. Verschwenken oder Schwenken des zweiten Bedienteils drückt stets ein in der Aufnahme des zweiten Bedienteils gelagerter Abschnitt des ersten Bedienteils gegen eine Seitenwand der Aufnahme.

In weiteren Varianten der vorstehend beschriebenen Ausführungen ist die Zahnstange eine gefederte Zahnstange und über Führungselemente am Gehäuse gelagert. Bei einer gefederten Zahnstange kann analog zu einer Koppelstange mit gekröpften Abschnitten Energie gespeichert werden. Eine gefederte Zahnstange ermöglicht es analog zu dem gefedert ausgebildeten ersten Zahnrad Energie zu speichern und weiter einen Druck auf die zweiten Lamellen in ihrer Endposition auszuüben, sodass diese in ihrer abdichtenden Schließstellung verbleiben, selbst dann wenn keine Bedienkraft mehr über das Bedienelement aufgebracht wird. Damit das Bedienelement nicht selbstständig aufgrund des hohen Drucks, der in der gefederten Zahnstange und bspw. auch dem gefederten Zahnrad gespeichert ist, zurückbewegt wird, kann das zweite Bedienteil bspw. über eine Klemme oder eine Feder am Gehäuse in einer entsprechenden Öffnung gelagert sein. Zum Verdrehen oder Drehen bzw. Verschwenken oder Schwenken des zweiten Bedienteils muss dann analog zu der Feder für das erste Bedienteil eine bestimmte Mindestbedienkraft aufgebracht werden. Die Federkraft verhindert dabei ein Zurückbewegen ohne eine von außen eingebrachte Bedienkraft durch eine Bedienperson. Darüber hinaus gleicht die gefederte Ausführung der Zahnstange Toleranzen der einzelnen Komponenten des Luftausströmers aus. So kann auch bei Abweichungen in den Maßen der einzelnen Komponenten ein vollständiges Verschließen des Luftkanals durch die zweiten Lamellen erreicht werden, da der mögliche Verschiebeweg der Zahnstange aufgrund der gefederten Ausführung größer ist als der tatsächlich benötigte Verschiebeweg. Die Herstellungskosten des Luftausströmers lassen sich hierdurch erheblich reduzieren. Analog lassen sich durch die gefederte Ausführung der Koppelstangen durch die gekröpften Abschnitte Toleranzen ausgleichen.

In weiteren Varianten aller vorstehend beschriebenen Ausführungen können die zweiten Lamellen einen Querschnitt mit mindestens einer Abstufung aufweisen, die zweiten Lamellen mindestens an ihren parallel zur Schwenkachse verlaufenden Außenkanten eine Dichtung aufweisen, und/oder das Gehäuse im Bereich der zweiten Lamellen an inneren Seitenwänden eine Dichtungsanordnung aufweisen.

Problematisch bei einem Schließen durch 1K-Lamellen ist die Leckluft, die durch die Spalten und Toleranzen entsteht. Um die Leckluft so gering wie möglich zu halten, kann zusätzlich an die orthogonal zur ersten Steuerlamelle gelagerten zweiten Lamellen als auch an das Gehäuse für den Luftausströmer eine Dichtkontur angebracht sein. Eine kaskadenförmige Ausbildung der zweiten Lamellen reduziert die Spalten und gleicht auch Toleranzen aus. Eine Kaskadenform wird dabei durch die Abstufung der zweiten Lamellen erreicht. Die zweiten Lamellen und damit auch die zweite Steuerlamelle weisen in derartigen Ausführungsformen mindestens zwei flächige Abschnitte auf, die versetzt zueinander angeordnet sind. Befinden sich die zweiten Lamellen in ihrer Schließstellung (Endposition), um mit dem Luftkanal abzuschließen und die Luftzufuhr zu unterbinden, liegen die versetzt angeordneten Flächenabschnitte der zweiten Lamellen aneinander an. Die zweiten Lamellen können auch so ausgebildet sein, dass diese jeweils nur in den Anlagebereichen eine Abstufung aufweisen. Die Anlagebereiche sind die Abschnitte der zweiten Lamellen, an welchen diese in der Schließposition mit benachbarten zweiten Lamellen oder an entsprechenden Anlagevorsprüngen im Gehäuse des Luftausströmers anliegen.

Die zweiten Lamellen können mindestens an ihren parallel zur Schwenkachse verlaufenden Außenkanten eine Dichtung aufweisen und das Gehäuse kann im Bereich der zweiten Lamellen mindestens um parallel zur Schwenkachse der zweiten Lamellen verlaufenden inneren Seitenwänden eine Dichtung aufweisen. Die Dichtung an den zweiten Lamellen und im Gehäuse kann aber auch umlaufend vorgesehen sein. Die Dichtung verbessert zusätzlich die Abdichtung einer Schließposition der zweiten Lamellen (Endposition) . Vorzugsweise sollten die Dichtungsmittel so gewählt sein, dass diese flexibel und elastisch sind. Hierüber wird sichergestellt, dass die Dichtungselemente sich an die zweiten Lamellen anlegen und nicht ein Verschwenken oder Schwenken derer behindern. Vorzugsweise können hierfür Kunststoffschäume oder Kautschukelemente/Kautschukschäume oder Schäume aus Gummi oder Schäume aus/mit Gummibestandteilen oder Elementen aus Gummi verwendet werden.

In weiteren Ausführungsformen kann die erste Steuerlamelle mit mindestens einer weiteren verschwenkbaren, im Gehäuse gelagerten Lamelle gekoppelt sein, die parallel zur ersten Steuerlamelle verschwenkbar ist.

Bei Einrichtungen mit einer geringen Höhe ist oftmals nur eine Steuerlamelle erforderlich. Weist der Luftausströmer jedoch eine größere Höhe auf, so können mehrere parallel zur ersten Steuerlamelle angeordnete Lamellen vorgesehen sein. Die Parallel zur ersten Steuerlamelle angeordneten Lamellen sind dabei vorzugsweise außerhalb des Gehäuses über entsprechende Mitnahmeelemente und eine weitere Koppelstange mit der ersten Steuerlamelle gekoppelt.

Bei den vorstehend beschriebenen Varianten wurde zusätzlich zu einer ersten Schwenkbewegung noch eine zweite Schwenkbewegung realisiert, da bei sogenannten Joysticks als Bedienelemente die Schiebewege in der Regel sehr begrenzt sind und in diesem Fall auch noch die Schließfunktion über den Joystick durchgeführt werden soll. Daher wird die erste Steuerlamelle gegenläufig zum ersten Bedienteil verschwenkt.

Bei der ersten Ausführungsvariante wurden insbesondere, um ein Schließen durch Druck für alle zweiten Lamellen zu realisieren, anstatt einer Koppelstange zwei Koppelstangen verwendet und diese so angeordnet, dass jede zweite Lamelle durch Druck über die Koppelstangen in die Endposition bewegt wird.

Dadurch, dass die wesentlichen Kinematik-Bauteile, wie das erste Verstellelement, das erste Zahnrad, und das zweite Verstellelement außerhalb des Gehäuses des Luftausströmers angeordnet sind, werden Querschnittsverluste, wie aus dem Stand der Technik bekannt, vermieden. Darüber hinaus sind bei den aus dem Stand der Technik bekannten Luftausströmern oftmals die wesentlichen Kinematik-Bauteile sichtbar, was das optische Erscheinungsbild von derartigen Luftausströmern verschlechtert. Die eben beschriebenen Luftausströmer lösen diese Probleme, da die wesentlichen Komponenten, wie beispielsweise die beiden Verstellelemente und das erste Zahnrad außerhalb des Gehäuses angeordnet sind. Darüber hinaus besteht ein weiterer Vorteil bei den vorstehend beschriebenen Luftausströmern darin, dass keine Ausschnitte in einer der Lamellen, beispielsweise den zweiten Lamellen notwendig sind. So offenbart beispielsweise DE 10 2013 100 534 A1 die Möglichkeit die Vertikallamelle in eine Schließposition zu verbringen, jedoch ist bei sämtlichen Ausführungsformen mindestens eine Lamelle mit einem großflächigem Ausschnitt versehen, der die Luftablenkung unzureichend erfüllt und zudem eine zusätzliche Verwirbelung eines Luftstroms bewirkt. In der Regel sind solche Ausschnitte vor allem bei Vertikallamellen bei Luftausströmern aus dem Stand der Technik erforderlich, da das Bedienelement dieser Luftausströmer einen Angriffspunkt auf die Vertikallamellen benötigt.

Bei den Luftausströmern können auch Beleuchtungselemente, wie Leuchtioden, Lichtleiter oder andere Mittel vorgesehen sein. Beispielsweise kann im Bereich des Lagerstegs eine Lichtquelle angeordnet sein, die über Lichtleiter eine Beleuchtung der ersten Steuerlamelle, der zweiten Lamellen oder von Teilen des Gehäuses bereitstellt.

Weitere Vorteile, Merkmale sowie Ausgestaltungsmöglichkeiten ergeben sich aus der nachfolgenden Figurenbeschreibung von nicht einschwenkend zu verstehenden Ausführungsbeispielen.

In den Zeichnungen zeigen:
- Fig. 1: eine schematische Vorderansicht eines Luftausströmers einer ersten Ausführungsform;
- Fig. 2: eine schematische Draufsicht auf den Luftausströmer von Fig. 1;
- Fig. 3-5: perspektivische Darstellungen von Komponenten des Luftausströmers von Fig. 1;
- Fig. 6 und 7: eine schematische Draufsicht auf Komponenten des Luftausströmers von Fig. 1;
- Fig. 8-10: weitere perspektivische Darstellungen von Komponenten des Luftausströmers von Fig. 1;
- Fig. 11: eine Explosionsdarstellung von Komponenten des Luftausströmers von Fig. 1;
- Fig. 12: eine weitere schematische Draufsicht auf Komponenten des Luftausströmers von Fig. 1;
- Fig. 13-15: noch weitere perspektivische Darstellungen von Komponenten des Luftausströmers von Fig. 1;
- Fig. 16: eine schematische Schnittansicht des Luftausströmers von Fig. 1;
- Fig. 17: eine perspektivische Darstellung eines Luftausströmers einer zweiten Ausführungsform;
- Fig. 18: eine perspektivische Darstellung von Komponenten des Luftausströmers von Fig. 17;
- Fig. 19: eine schematische Draufsicht auf Komponenten des Luftausströmers von Fig. 17;
- Fig. 20-23: verschiedene Komponenten des Luftausströmers von Fig. 17;
- Fig. 24: eine weitere perspektivische Darstellung des Luftausströmers von Fig. 17;
- Fig. 25: eine noch weitere perspektivische Darstellung von Komponenten des Luftausströmers von Fig. 17;
- Fig. 26 und 27: schematische Schnittdarstellungen des Luftausströmers von Fig. 17; und
- Fig. 28-30: verschiedene schematische Draufsichten auf den Luftausströmer von Fig. 17.

In den Figuren mit gleichen Bezugszeichen versehende Teile entsprechen im Wesentlichen einander, sofern nichts anderes angegeben ist. Ferner wird darauf verzichtet, Bestandteile der Luftausströmer 10 zum Steuern eines Luftstroms zu beschreiben, die nicht wesentlich zum Verständnis der hierin offenbarten technischen Lehre sind.

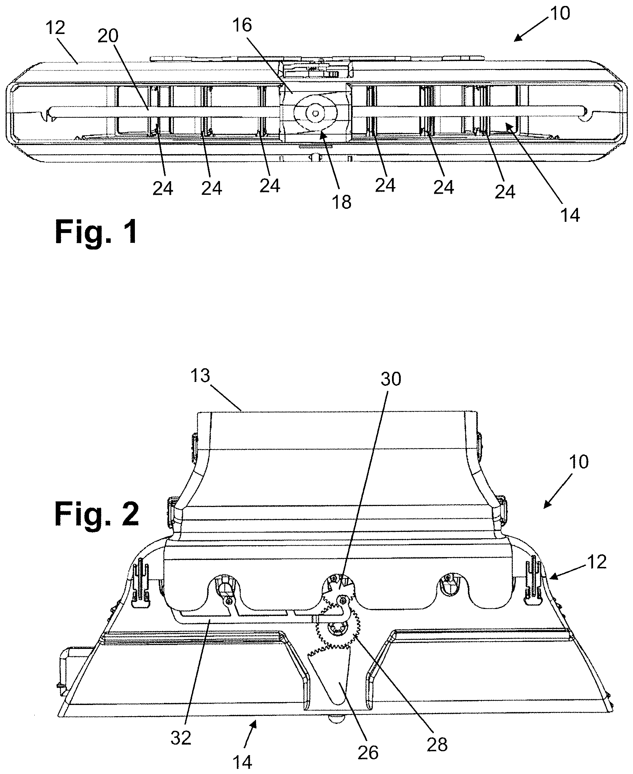

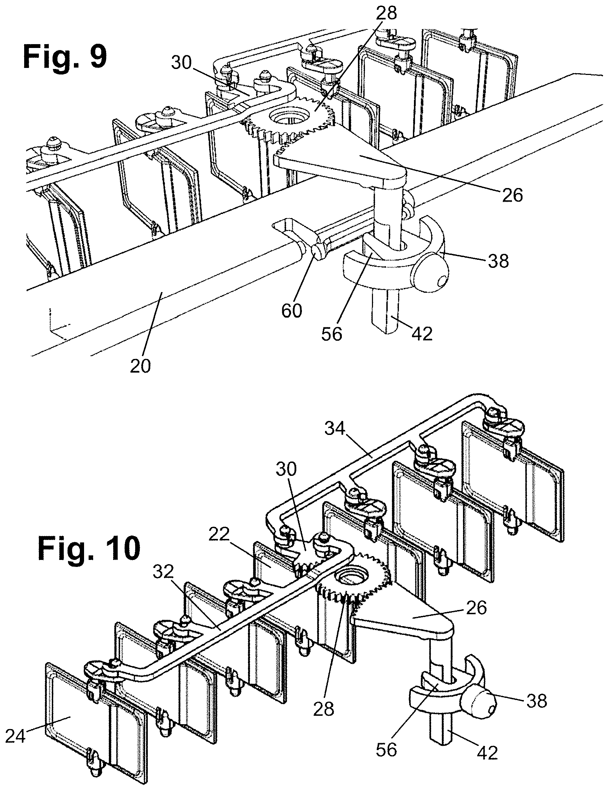

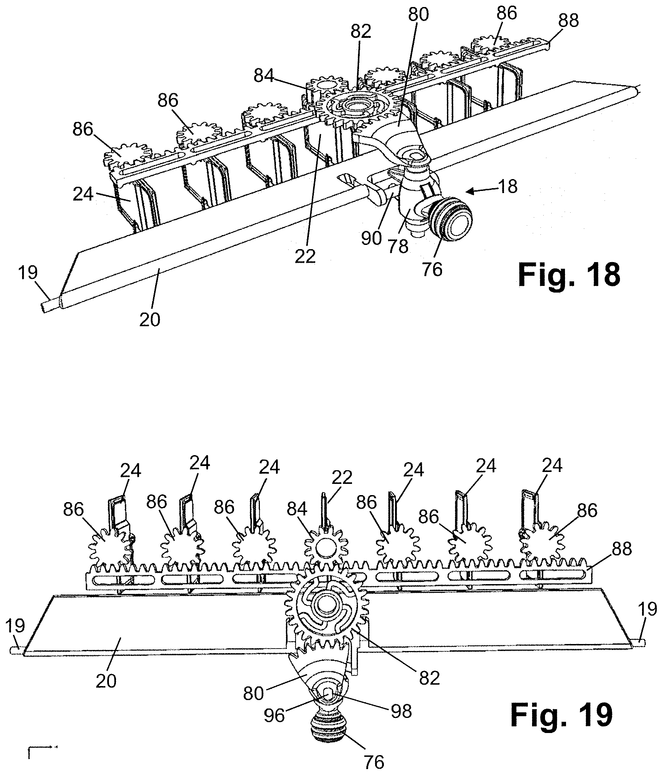

Die in den Fig. 1 bis 30 gezeigten Luftausströmer 10 sowie Komponenten können beispielsweise im Bereich einer Mittelkonsole eines Fahrzeugarmaturenbretts angeordnet sein. Die Luftausströmer 10 sind dabei als sogenannte Breitbandausströmer ausgebildet. Das bedeutet, dass die Luftausströmer 10 in einem Luftaustrittsbereich 14 eine größere Breite als Höhe aufweisen. Vorzugsweise weist der Luftauszugsbereich 14 eine Breite von über 200 mm, vorzugsweise eine Breite von über 300 mm auf.

In der nachfolgenden Beschreibung werden die Begriffe "verdrehen" und "schwenken" mitunter als Synonyme verwendet. So sind beispielsweise verschwenkbare Lamellen auch um ihre Schwenkachsen drehbar und ein verdrehbar gelagertes Bedienelement kann um seine Drehachse verschwenkt werden.

### Erste Ausführungsform

In den Fig. 1 bis 16 wird eine erste Ausführungsform eines Luftausströmers 10 gezeigt und mit Bezug auf die Fig. 1 bis 16 nachfolgend beschrieben.

Der Luftausströmer 10 weist ein Gehäuse 12 auf. Das Gehäuse 12 weist an seiner Vorderseite eine Öffnung auf, welche den Luftaustrittsbereich 14 definiert. Im Luftaustrittsbereich 14 ist ein Lagersteg 16 angeordnet, der sich im Wesentlichen mittig durch den Luftaustrittsbereich 14 erstreckt. An dem Lagersteg 16 ist ein Bedienelement 18 angeordnet. Das Bedienelement 18 dient dazu eine im Wesentlichen horizontal verlaufende erste Steuerlamelle 20 und über ein erstes Verstellelement 26, ein erstes Zahnrad 28 und ein zweites Verstellelement 30 zweite Lamellen 24 zu verschwenken, um die über den Luftaustrittsbereich 14 austretende Luft entsprechend abzulenken. Zusätzlich kann über das Bedienelement 18 die Menge der über den Luftaustrittsbereich 14 ausströmenden Luft eingestellt werden, wozu die zweiten Lamellen 24 in ihre Schließposition bewegt werden.

An der Rückseite weist das Gehäuse 12 einen Anschluss 13 an einen Luftzuführkanal auf. Der Luftzuführkanal kann beispielsweise mit einer Klimaanlage gekoppelt sein, sodass klimatisierte Luft aus dem Luftausströmer 10 über den Luftaustrittsbereich 14 ausströmen kann.

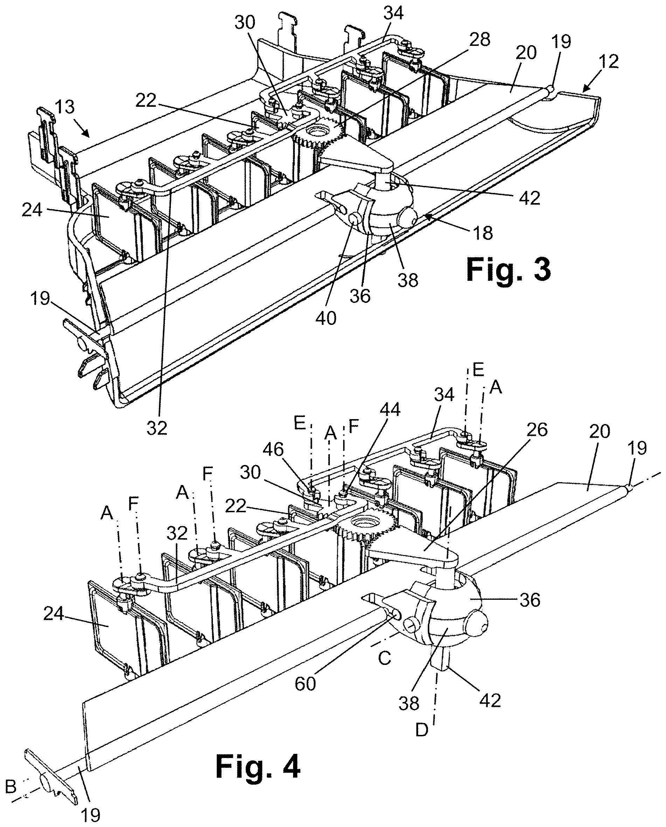

Das Bedienelement 18 besteht aus einem ersten Bedienteil 36 und einem zweiten Bedienteil 38. Wird das erste Bedienteil 36 in dem Lagersteg 16 um eine erste Achse C (siehe Fig. 4) durch Druck auf den Bedienknopf an dem zweiten Bedienteil 38 verschwenkt, so erfolgt ein gegenläufiges Verschwenken oder Schwenken der ersten Steuerlamelle 20 um deren Längsachse B. Die Längsachse B verläuft durch Lagerzapfen 19, über welche die erste Steuerlamelle 20 in dem Gehäuse 12 gelagert ist. Die erste Steuerlamelle 20 weist zudem Lagerzapfen 70 auf, die sich entlang der Längsachse B erstrecken und in Aufnahmen an dem Lagersteg 16 verschwenkbar gelagert sind. Wird das erste Bedienteil 36 über Druck auf das zweite Bedienteil 38 von oben um die erste Achse C nach unten verschwenkt, so erfolgt ein gegenläufiges Verschwenken oder Schwenken der ersten Steuerlamelle 20 derart, dass ein über den Luftaustrittsabschnitt 14 ausgegebener Luftstrom nach oben hin abgelenkt wird. Wird das zweite Bedienteil 38, das in einer Öffnung 66 des ersten Bedienteils 36 um eine zweite Achse D verschwenkbar gelagert ist, beispielsweise nach rechts oder links verschwenkt, so erfolgt analog ein Verschwenken oder Schwenken der zweiten Lamellen 24 in entsprechender Weise. Wird das zweite Bedienteil 38 über einen bestimmten Bereich hinaus verschwenkt, so erfolgt ein Verbringen der zweiten Lamellen 24 in deren End- bzw. Schließposition, wobei der Luftkanal durch das Gehäuse 12 des Luftausströmers 10 vollständig geschlossen wird.

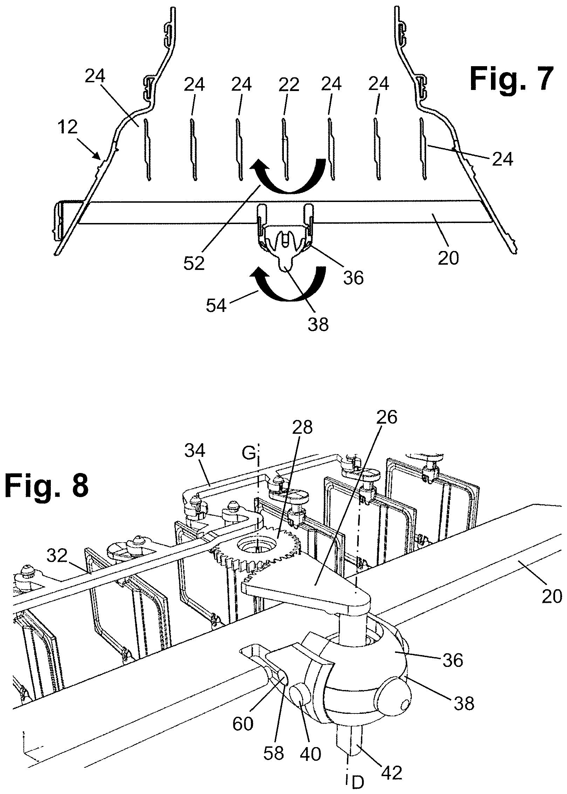

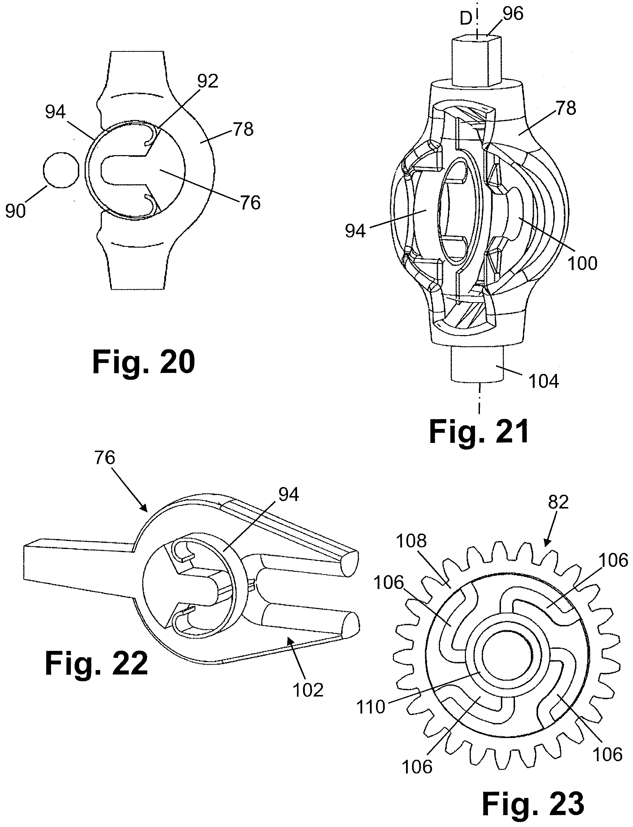

Zur Übertragung der Schwenkbewegung des zweiten Bedienteils 38 auf die zweiten Lamellen 24 ist das erste Verstellelement 26 über einen Abschnitt 42 verdrehbar in einer entsprechenden Öffnung im Gehäuse 12 angeordnet. Der Abschnitt 42 erstreckt sich entlang der zweiten Achse D. Das erste Verstellelement 26 ist mit dem zweiten Bedienteil 38 gekoppelt und wird beim Verschwenken oder Schwenken des zweiten Bedienteils 38 in entsprechender Weise verschwenkt. Über den Zahnabschnitt des ersten Verstellelementes 26 wird ein erstes Zahnrad 28, das um eine Achse G drehbar am Gehäuse 12 des Luftausströmers gelagert ist, verdreht (siehe Fig. 8). Das erste Zahnrad 28 ist gefedert ausgebildet und bspw. so wie das Zahnrad 82 des Luftausströmers 10 der zweiten Ausführungsform ausgeführt (siehe Fig. 23). Dadurch können Toleranzen ausgeglichen werden und es wird sichergestellt, dass die zweiten Lamellen 24 in ihre Schließposition verbracht werden. In ihrer Schließposition liegen die zweiten Lamellen 24 und die zweite Steuerlamelle 22 an ihren Kanten oder an Anlageflächen aneinander an.

Das erste Zahnrad 28 steht mit einem zweiten Verstellelement 30 in Eingriff. Das zweite Verstellelement 30 ist um die Schwenkachse A einer zweiten Steuerlamelle 22 drehbar gelagert (siehe Fig. 4). Die Schwenkachse A der zweiten Steuerlamelle 22 bildet dabei die Drehachse des zweiten Verstellelementes 30, wobei das zweite Verstellelement 30 fest mit der zweiten Steuerlamelle 22 verbunden ist. Wird das erste Zahnrad 28 verdreht, so erfolgt über den Zahnsegmentabschnitt des zweiten Verstellelementes 30 ein Verdrehen oder Drehen in entsprechender Weise und damit ein entsprechendes Verschwenken oder Schwenken der zweiten Steuerlamelle 22. Das zweite Verstellelement 30 weist zudem exzentrisch zur Schwenkachse A angeordnete Koppelelemente 44 und 46 auf. Das Koppelelement 44 ist mit einer ersten Koppelstange 32 und das zweite Koppelelement 46 mit einer zweiten Koppelstange 34 verbunden. Die Koppelstangen 32 und 34 übertragen die Schwenkbewegung der zweiten Steuerlamelle 22 auf die weiteren zweiten Lamellen 24.

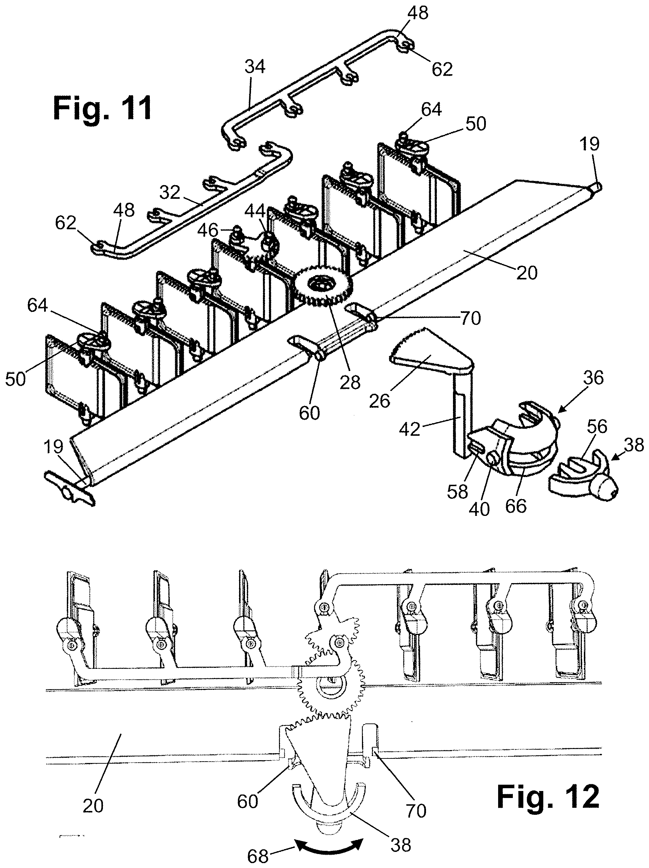

Die zweiten Lamellen 24 sind über Lagerstifte verschwenkbar in dem Gehäuse 12 des Luftausströmers 10 angeordnet. Die zweiten Lamellen 24 und die zweite Steuerlamelle 22 können um ihre Schwenkachsen A verdreht werden. Die zweiten Lamellen 24 weisen zudem einen Koppelfortsatz 50 auf, über welchen die zweiten Lamellen 24 über weitere Koppelelemente in Form von Koppelstiften 64 (siehe Fig. 11) mit den Koppelstangen 32 und 34 verbunden sind. Die Koppelstifte 64 sind hierzu verdrehbar in Öffnungen 62 an den gekröpften Abschnitten 48 gelagert. Wie insbesondere in Fig. 4 dargestellt, verläuft die Verbindung von gekröpften Abschnitten 48 der Koppelstangen 32 und 34 zu den Koppelstiften 64 an den Koppelfortsätzen 50 exzentrisch zur Schwenkachse A. Die Verbindung der Koppelstifte 64 der zweiten Lamellen 24 an der ersten Gruppe von zweiten Lamellen 24 mit der ersten Koppelstange 32 verläuft durch die Achsen F. Entsprechend verläuft die Verbindung der zweiten Lamellen 24 einer zweiten Gruppe von zweiten Lamellen 24 mit der zweiten Koppelstange 34 durch die Achsen E.

Wird das zweite Bedienteil 38 um die zweite Achse D verschwenkt, erfolgt bei einem Verschwenken oder Schwenken um ein bestimmtes Maß hinaus ein Verbringen der zweiten Lamellen 24 in deren Schließposition, wobei die zweiten Lamellen 24 den Luftkanal durch das Gehäuse 12 des Luftausströmers 10 verschließen. Durch die geteilte Ausbildung, d. h. das Vorsehen zweiter Koppelstangen 32 und 34 werden die zweiten Lamellen 24 stets durch Druck in ihre Schließposition verbracht. Ferner bewirken die gekröpften Abschnitte 48 der Koppelstangen 32 und 34 eine Federung. Dabei kann über die Federung ein Druck auf die zweiten Lamellen 24 aufrechterhalten werden, wenn sich diese in ihrer Schließposition befinden. Die gefederte Ausbildung der Koppelstangen 32 und 34 über die gekröpften Abschnitte 48 kann wie die gefederte Ausbildung des Zahnrads 28 zum Ausgleich von Toleranzen der Komponenten des Luftausströmers 10 dienen, wie vorstehend und in der Beschreibungseinleitung dargelegt.

Das erste Bedienteil 36 weist Lagerzapfen 40 auf, über welche das erste Bedienteil 36 um die erste Achse C verschwenkbar in dem Lagersteg 16 gelagert ist. Das erste Bedienteil 36 weist zudem Aufnahmen 58 auf, welche Koppelzapfen 60 an der ersten Steuerlamelle 20 umgreifen (siehe Fig. 8). Um einen Ausgleich bei einem Verschwenken oder Schwenken der ersten Steuerlamelle 20 und der zweiten Lamelle 24 in sämtlichen Stellungen der jeweiligen Lamellen zu erreichen und um ein gegenläufiges Verschwenken oder Schwenken der ersten Steuerlamelle 20 zu dem ersten Bedienteil 36 zu erreichen, können die Koppelzapfen 60 entlang der Aufnahmen 58 bewegt werden.

Das zweite Bedienteil 38 weist einen ersten Steuerabschnitt 56 auf, der den Abschnitt 42 des ersten Verstellelementes 26 umgreift. Der von dem ersten Steuerabschnitt 56 umgriffene Abschnitt 42 ist entsprechend so ausgebildet, dass kein Verdrehen oder Drehen des ersten Verstellelementes 26 ohne eine Verlagerung des zweiten Bedienteils 38 erfolgen kann. Jedoch ist der erste Steuerabschnitt 56 so ausgebildet, dass auch bei einem Verschwenken oder Schwenken des ersten Bedienteils 36 eine sichere Steuerung durch Verschwenken oder Schwenken des ersten Verstellelementes 26 noch durchgeführt werden kann.

Die Fig. 3 und 4 zeigen dabei schematische Ansichten von Komponenten des Luftausströmers 10 ohne bzw. mit Teilen des Gehäuses 12.

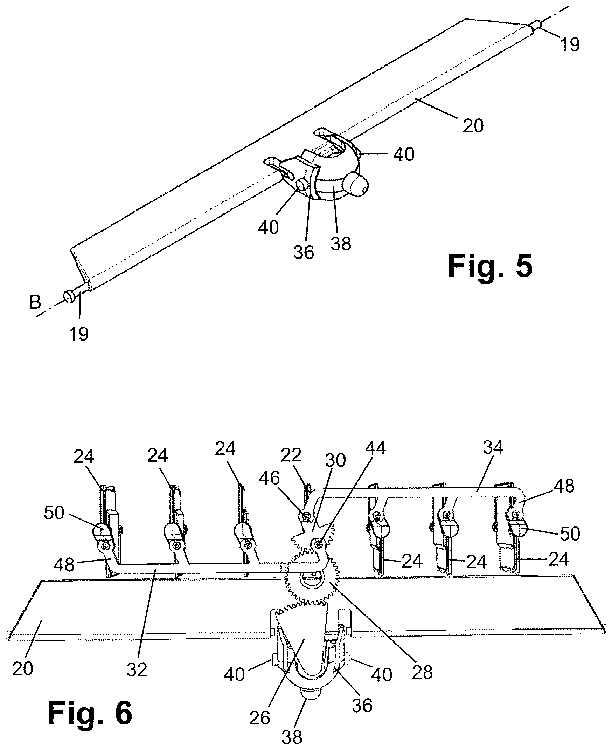

In Fig. 5 ist eine perspektivische Darstellung der ersten Steuerlamelle 20 und des Bedienteils 18 gezeigt. Fig. 6 zeigt eine schematische Draufsicht auf Elemente des Luftausströmers 10 ohne Gehäuse 12. In Verbindung mit Fig. 7 wird deutlich, dass bei einem Verschwenken oder Schwenken des zweiten Bedienteils 38 in Richtung des Pfeils 54 die zweiten Lamellen 24 sowie die zweite Steuerlamelle 22 ein entsprechendes Verschwenken oder Schwenken in Richtung des Pfeils 52 durchführen. Das Zahnradsegment des ersten Verstellelementes 26 sowie das Zahnradsegment des zweiten Verstellelementes 30 und die Ausbildung des ersten Zahnrads 28 können so bestimmt werden, dass eine Über- bzw. Untersetzung der Verschwenkbewegung des zweiten Bedienteils 38 erreicht wird. Die Über- bzw. Untersetzung ist im Hinblick auf die Größe des Luftausströmers 10 sowie die gewünschten erforderlichen Bedienkräfte vorzusehen.

Insbesondere erlaubt die gefederte Ausbildung des ersten Zahnrads 28 eine relative Bewegung bzw. ein relatives Verdrehen oder Drehen des Lagers des Zahnrads (siehe Lager 110) zu dem Zahnkranz des Zahnrads (siehe Zahnkranz 108). Das Verdrehen oder Drehen zueinander kann in beide Richtungen erfolgen, wodurch Energie gespeichert werden kann und das Zahnrad vorgespannt ist. Demgemäß kann das erste Zahnrad 28 auch gegenüber einem normalen Zahnrad weiter verdreht werden, wenn bspw. ein herkömmliches Zahnrad ohne Federung aufgrund der konstruktiven Ausgestaltung des Luftausströmers 10 nicht weiter verdreht werden kann.

In Fig. 8 ist schematisch dargestellt, wie die Koppelzapfen 60 der ersten Steuerlamelle 20 in den Aufnahmen 58 des ersten Bedienteils 36 aufgenommen sind.

Fig. 11 zeigt die Anordnung der Koppelzapfen 60 und der Lagerzapfen 70 der ersten Steuerlamelle 20. Ferner ist die Öffnung 66 des ersten Bedienteils 36 dargestellt, in der das zweite Bedienteil 38 aufgenommen ist. Die Lagerzapfen 70 erstrecken sich entlang der Längsachse B und die Koppelzapfen 60 erstrecken sich parallel zur Längsachse B und parallel zur ersten Achse C.

Wird das zweite Bedienteil 38 um die zweite Achse D verschwenkt, wie in Fig. 12 durch den Pfeil 68 dargestellt, erfolgt ein Verdrehen oder Drehen des ersten Verstellelementes 26, ein Verdrehen oder Drehen des ersten Zahnrades 28 und damit ein Verdrehen oder Drehen des zweiten Verstellelementes 30. Entsprechend werden über die exzentrische Lagerung der Koppelelemente 44 und 46 die Koppelstangen 32 und 34 bewegt, was neben einem Verschwenken oder Schwenken der zweiten Steuerlamelle 22 zu einem Verschwenken oder Schwenken der zweiten Lamellen 24 führt. Die hierin beschriebene Ausbildung ermöglicht es die zweiten Lamellen 24 in ihre Schließposition, in welcher die zweiten Lamellen 24 im Wesentlichen in einer Ebene liegen, mittels Druck zu verbringen. Werden die zweiten Lamellen 24 mittels Druck in ihre Schließposition verbracht, so wird ein besseres Abdichten beim Verschließen des Luftkanals erreicht. Hierbei treten keine oder nur sehr geringe Leckluftströme bei einem geschlossenen Luftausströmer 10 auf. Restliche Leckluftströme können durch zusätzliche Dichtungen an den zweiten Lamellen 24 und der zweiten Steuerlamelle 22 sowie an den Innenseiten des Gehäuses 12 in den Anlagebereichen für die zweiten Lamellen 24 und die zweite Steuerlamelle 22 unterbunden werden. Insbesondere wird ein abdichtendes Verschließen auch dann erreicht, wenn die zweiten Lamellen 24 und die zweite Steuerlamelle 22 nicht nur an Kanten aneinander anliegen, sondern an Kontaktflächen.

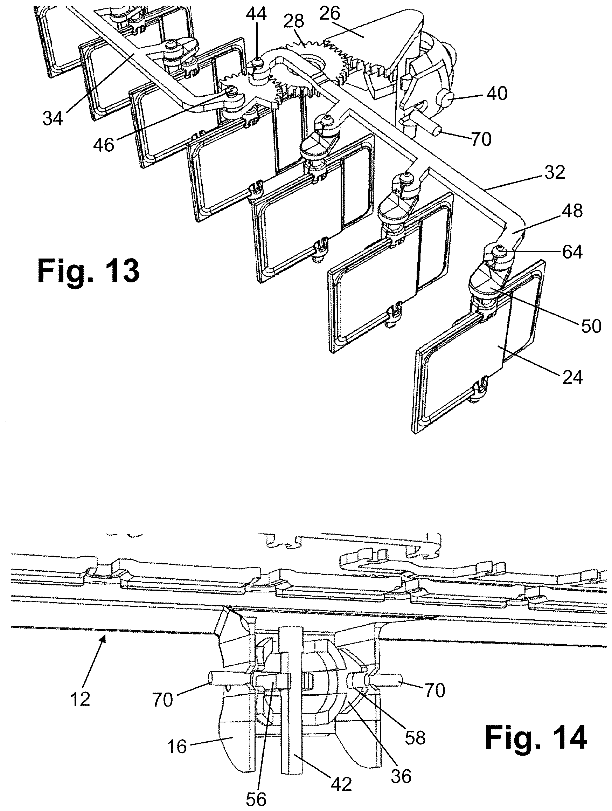

Die Ausbildung der zweiten Lamellen 24 und der zweiten Steuerlamelle 22 sowie die exzentrische Lagerung der Koppelelemente 44 und 46 sind auch der perspektivischen Darstellung von Fig. 13 zu entnehmen. Auch ist dieser Darstellung die Ausbildung der gekröpften Abschnitte 48 der Koppelstangen 32 und 34 zu entnehmen. Dabei ist die Kröpfung in den Abschnitten 48 derart gewählt, dass das Aufbringen von Druck zum Verbringen in die Schließposition unterstützt wird.

Fig. 14 zeigt eine Ansicht von hinten auf Komponenten des Luftausströmers 10. Fig. 14 zeigt den Lagersteg 16 von hinten und die Lagerung der ersten Steuerlamelle 20 über die Lagerzapfen 70.

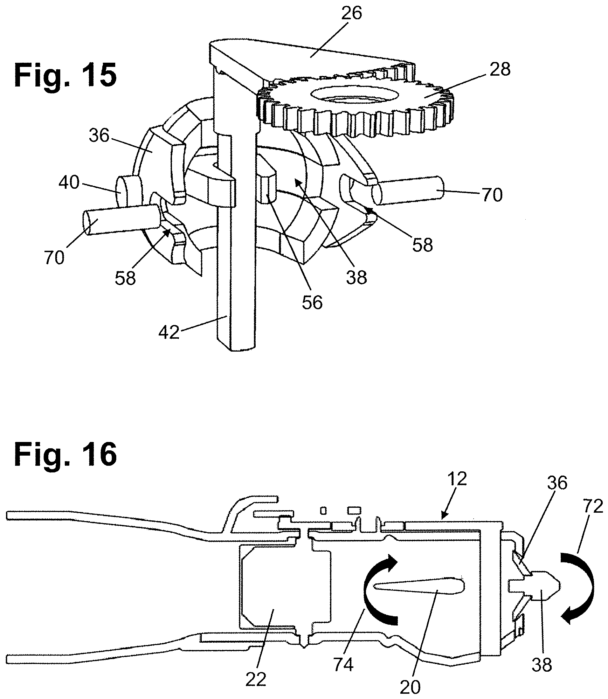

Eine vergrößerte Darstellung des ersten Bedienteils 36, des zweiten Bedienteiles 38 sowie des ersten Verstellelementes 26 und des ersten Zahnrads 28 sind in Fig. 15 gezeigt. Das Zahnrad 28 ist anders als in den Fig. 1 bis 16 dargestellt gefedert ausgebildet. Eine Federung kann auch durch eine bestimmte Lagerung erzielt werden. Bspw. kann ein herkömmliches Zahnrad über eine gefederte Lagereinrichtung an dem Gehäuse 12 gelagert sein.

Fig. 16 zeigt einen Schnitt durch einen Luftausströmer 10. Hierin ist dargestellt, dass bei einem Verschwenken oder Schwenken des ersten Bedienteils 36, beispielsweise über das zweite Bedienteil 38 nach unten in Richtung des Pfeils 72, ein gegenläufiges Verschwenken oder Schwenken der ersten Steuerlamelle 20 in Richtung des Pfeils 74 erfolgt.

### Zweite Ausführungsform

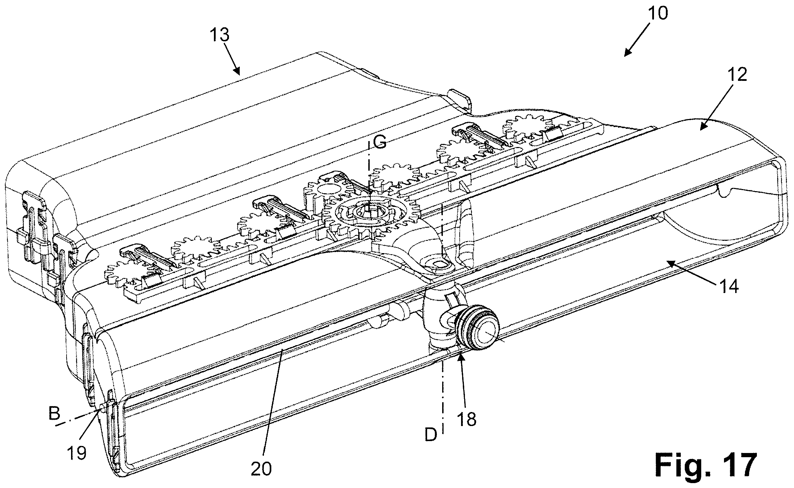

In den Fig. 17 bis 30 wird eine zweite Ausführungsform eines Luftausströmers 10 gezeigt und mit Bezug auf die Fig. 17 bis 30 nachfolgend beschrieben.

Der Luftausströmer 10 der zweiten Ausführungsform unterscheidet sich von dem Luftausströmer 10 der ersten Ausführungsform dadurch, dass kein Lagersteg 16 vorgesehen ist, sondern das zweite Bedienteil 78 als Lager dient. Das zweite Bedienteil 78 stützt sich zwischen einem oberen Gehäuseteil und einem unteren Gehäuseteil ab, sodass auch bei einer erhöhten Bedienkraft, welche beispielsweise auf das erste Bedienteil 76 aufgebracht wird, kein Verbiegen der ersten Steuerlamelle 20 auftritt. Das zweite Bedienteil 78 ist um die zweite Achse D drehbar in dem Gehäuse 12 gelagert, sodass analog zu der ersten beschriebenen Ausführungsform ein Verdrehen oder Drehen des zweiten Bedienteils 78 ein Verschwenken oder Schwenken von zweiten Lamellen 24 und einer zweiten Steuerlamelle 22 bewirkt. Wird das erste Bedienteil 76 nach unten oder oben verschwenkt, erfolgt ein gegenläufiges Verschwenken oder Schwenken der ersten Steuerlamelle 20. Die erste Steuerlamelle 20 weist hierbei eine Steuerwelle 90 auf, die von einem zweiten Steuerabschnitt 102 des ersten Bedienteils 76 umgriffen wird.

Das zweite Bedienteil 78 weist Lager auf, über welche das zweite Bedienteil 78 in Öffnungen in dem Gehäuse 12 gelagert ist. Ein Verbindungstift 96 des zweiten Bedienteils 78 steht jedoch aus dem Gehäuse 12 nach oben hervor und ist in einer entsprechenden Aufnahme 98 eines zweiten Verstellelementes 80 aufgenommen. Dies bedeutet, dass ein Verschwenken oder Schwenken des zweiten Bedienteils 78 zu einem entsprechenden Verschwenken oder Schwenken des ersten Verstellelementes 80 führt. Analog zu der ersten beschriebenen Ausführungsform ist das erste Verstellelement 80 über ein erstes gefedert ausgebildetes Zahnrad 82 mit einem zweiten Verstellelement gekoppelt. Wie in Fig. 23 dargestellt, weist das erste Zahnrad 82 ein Lager 110 auf, über welches es um die Achse G drehbar am Gehäuse 12 des Luftausströmers 10 gelagert ist. Ferner weist das Zahnrad 82 einen Zahnkranz 108 auf. Das Lager 110 ist über Arme 106 mit dem Zahnkranz 108 verbunden, wobei die Ausbildung der Arme 106 eine Federung ermöglicht. Die Federung ermöglicht beispielsweise bei einem Überdrehen oder auch bei einer anderen Benutzung Energie zu speichern und in einer geschlossenen Position der Lamellen 24 die gespeicherte Energie über eine Zahnstange 88 und dritte Zahnräder 86 sowie das Zahnrad 84 auf die zweiten Lamellen 24 und die zweite Steuerlamelle 22 zu übertragen, um deren Position aufrecht zu erhalten und/oder um Toleranzen auszugleichen. Hierdurch kann das abdichtende Verschließen eines Luftkanals des Luftausströmers 10 auch nach dem Aufbringen einer Bedienkraft aufrechterhalten werden.

Bei der zweiten Ausführungsform wird das zweite Verstellelement durch das Zahnrad 84 gebildet, welches eine größere Höhe aufweist als das Zahnrad 82. Wird das Zahnrad 82 verdreht, so erfolgt analog ein Verdrehen oder Drehen des Zahnrads 84, welches mit der zweiten Steuerlamelle 22 gemeinsam um die Schwenkachse A verdrehbar ist. Zudem wird durch das Verdrehen oder Drehen des Zahnrads 84 die Zahnstange 88 in entsprechender Weise verlagert. Die Zähne der Zahnstange 88 stehen mit den Zähnen der dritten Zahnräder 86 in Eingriff und bewirken bei einer Verlagerung der Zahnstange 88 ein Verdrehen oder Drehen der dritten Zahnräder 86, welche fest mit den zweiten Lamellen 24 verbunden sind. Dabei wird über ein Verdrehen oder Drehen des ersten Zahnrads 82 ein gemeinsames Verschwenken oder Schwenken aller zweiten Lamellen 24 und der zweiten Steuerlamelle 22 erreicht.

Die Zahnstange 88 ist ebenfalls gefedert ausgeführt, wobei hierzu Öffnungen 114 vorgesehen sind. Die Längsseite ohne Zähne kann sich dabei relativ zu der Längsseite der Zahnstange 88 mit den Zähnen bewegen. Es kann dabei Energie gespeichert werden, die beispielsweise in einer geschlossenen Position des Luftausströmers 10 weiter Druck auf die Lamellen 24 über die Kopplung mit den dritten Zahnrädern 86 aufbringt und/oder zum Ausgleich von Toleranzen dient. So können in weiteren Ausführungen auch das Zahnrad 84 und die dritten Zahnräder 86 gefedert ausgebildet sein.

Die gefederte Ausführung des Zahnrads 82 und der Zahnstange 88 dienen insbesondere zum Ausgleich von Toleranzen bei den Komponenten des Luftausströmers 10, wie in der Beschreibungseinleitung und für die erste Ausführungsform dargelegt.

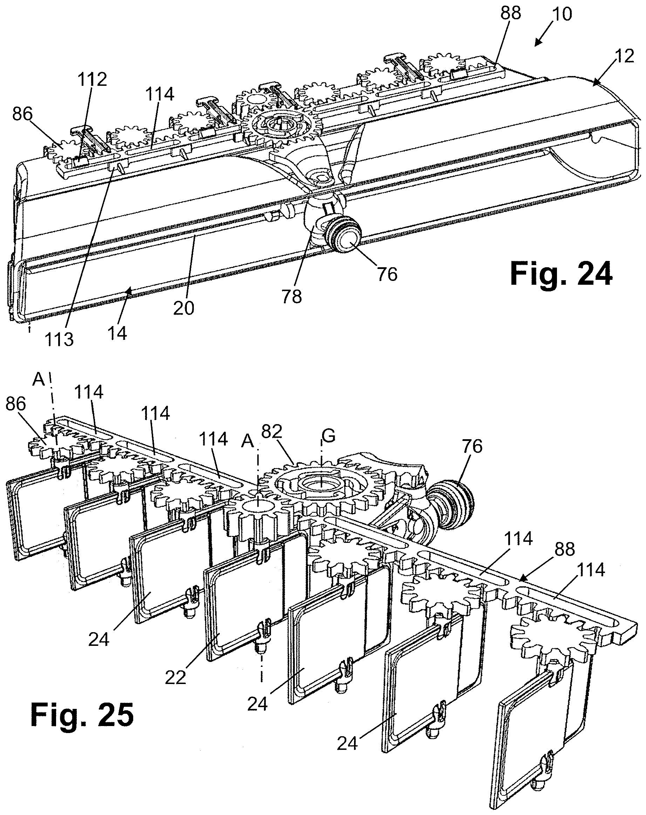

Wie in Fig. 24 dargestellt, sind in den Öffnungen 114 auch Führungselemente 112 aufgenommen, welche die Zahnstange 88 in Position halten. Die Führungselemente 112 sind so ausgebildet, dass sie eine gewisse Ausgleichsbewegung orthogonal zur Hauptverschieberichtung zulassen. Die Führungselemente 113 verhindern, dass die Zahnstange 88 von den Zahnrädern 86 wegbewegt wird. Die Führungselemente 113 stellen dabei sicher, dass die Zähne der Zahnstange 88 stets mit den Zähnen der Zahnräder 86 und 84 kämmen.

Die erste Steuerlamelle 20 ist bei der zweiten Ausführungsform nur über die Lagerzapfen 19 im Gehäuse 12 gelagert. In einem mittleren Bereich weist die erste Steuerlamelle 20 die Steuerwelle 90 auf. Die Steuerwelle 90 wird wie vorstehend beschrieben von dem zweiten Steuerabschnitt 102 umgriffen. Die Ausbildung des Steuerabschnitts 102 ist in Fig. 22 dargestellt. Der vordere Knopf an dem Bedienelement 18 wird auf den linksseitigen Abschnitt des ersten Bedienteils 76 aufgesteckt und durch den rechteckigen Querschnitt wird ein Verdrehen oder Drehen des Bedienknopfes zu dem ersten Bedienteil 76 verhindert. Der Bedienknopf kann beispielsweise mittels Hitzeeinwirkung oder durch Klebstoffe fest mit dem Bedienteil 76 verbunden werden und dadurch Teil des Bedienteils 76 werden. Das Bedienteil 76 weist eine seitliche Ausformung auf, an der eine Feder 94, vorzugsweise eine Metallfeder, angeordnet ist. Die Feder 94 ist in einer entsprechenden Aufnahme 92 in dem zweiten Bedienteil 78 angeordnet (siehe Fig. 20) und die gebogenen Bügel der Feder 94 stützten sich gegen die Abschnitte der Ausformung des ersten Bedienteils 76 ab. Ist das erste Bedienteil 76 in dem zweiten Bedienteil 78 aufgenommen, wobei das zweite Bedienteil 78 ein zusätzliches Lager 100 für das erste Bedienteil 76 aufweist, so kann ein Verschwenken oder Schwenken des ersten Bedienteils 76 um die erste Achse C nur dann erfolgen, wenn die durch die Feder 94 aufgebrachte Kraft überwunden wird. Die Feder 94 dient dabei insbesondere zum Ausgleich von Toleranzen und zum Einhalten von gleichmäßigen Bedienkräften für ein Verschwenken oder Schwenken der ersten Steuerlamelle 20.

In Fig. 21 ist ferner eine vergrößerte Darstellung des zweiten Bedienteils 78 mit einer in der Aufnahme 92 aufgenommenen Feder 94 dargestellt. Über den Lagerzapfen 104 ist das zweite Bedienteil 78 in einer entsprechenden Öffnung in einer unteren Gehäusehälfte am Gehäuse 12 des Luftausströmers 10 um die zweite Achse D drehbar gelagert. Der obere Verbindungsstift 96 dient zur Verbindung mit dem ersten Verstellelement 80. Eine drehbare Lagerung des zweiten Bedienteils 78 in einer oberen Gehäusehälfte des Gehäuses 12 erfolgt daher unterhalb des Verbindungsstifts 96 oder über einen unteren Abschnitt des Verbindungsstifts 96.

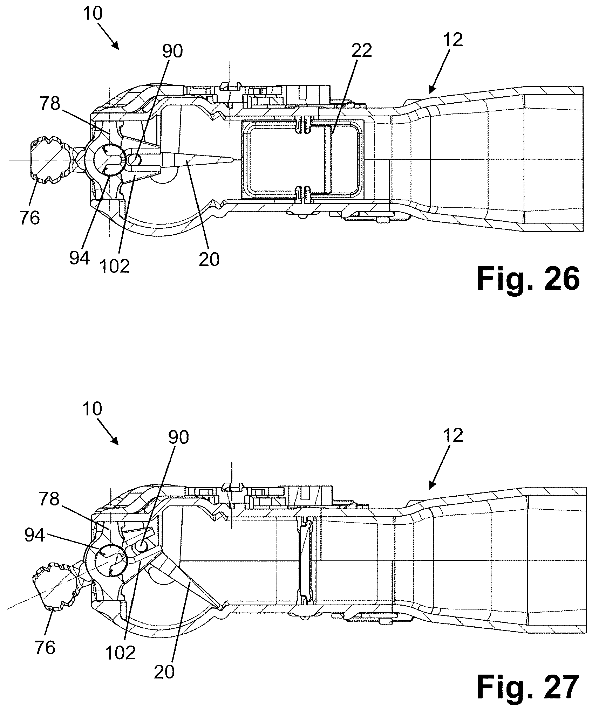

Die Fig. 26 und 27 zeigen verschiedene Zustände des Luftausströmers 10. In Fig. 26 befindet sich der Luftausströmer 10 in einer Neutralstellung, wobei die erste Steuerlamelle 20 und die zweiten Lamellen 24 sowie die zweite Steuerlamelle 22 nicht verschwenkt sind.

Fig. 27 zeigt demgegenüber eine Extremstellung, wobei die erste Steuerlamelle 20 maximal ausgelenkt ist und die zweiten Lamellen 24 sowie die zweite Steuerlamelle 22 sich in ihrer End- bzw. Schließstellung befinden. Um die erste Steuerlamelle 20 entsprechend wie in Fig. 27 dargestellt zu verschwenken, muss das erste Bedienteil 76 nach unten gedrückt werden. Hierbei kann die Lagerwelle 90 innerhalb der Aufnahme des zweiten Steuerabschnitts 102 gleiten. Wie den Fig. 26 und 27 weiter entnommen werden kann, erfolgt das Verschwenken oder Schwenken des ersten Bedienteils 76 gegen die Kraft der Feder 94, welche innerhalb der Aufnahme 92 abgestützt ist und gegen den vorstehenden Abschnitt des ersten Bedienteils 76 drückt.

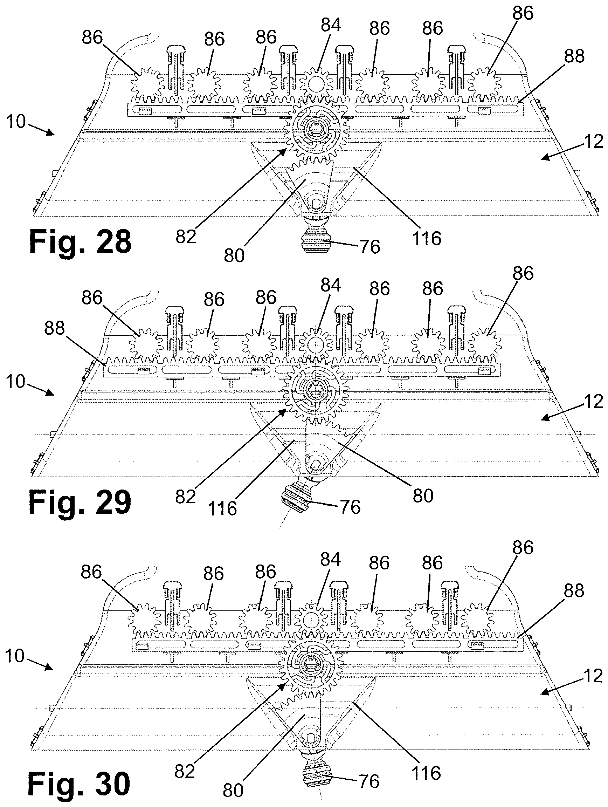

Die Fig. 28 bis 30 zeigen Ansichten zum Verschwenken oder Schwenken der zweiten Steuerlamelle 22 und der zweiten Lamellen 24. Fig. 28 zeigt im Wesentlichen eine Neutralstellung, wobei die zweiten Lamellen 24 kaum verschwenkt sind. Ferner ist in Fig. 28 bis 30 dargestellt, dass an der Oberseite des Gehäuses 12 eine Ausbuchtung 116 vorgesehen ist, die den Verschwenkweg des ersten Verstellelementes 80 beschränkt. Hierdurch wird verhindert, dass das erste Verstellelement 80 zu stark verdreht wird.

In Fig. 29 ist das erste Bedienteil 76 maximal nach links verschwenkt, wobei die zweiten Lamellen 24 und die zweite Steuerlamelle 22 den Luftkanal durch das Gehäuse 12 des Luftausströmers 10 unterbrechen (siehe Darstellung von Fig. 27).

In Fig. 30 ist das erste Bedienelement 76 nach rechts verschwenkt.

Bei einem Verschwenken oder Schwenken des ersten Bedienelements 76 um die zweite Achse D erfolgt eine Übertragung der Drehbewegung über die Zähne des Zahnabschnitts des ersten Steuerelements 80 auf das gefederte Zahnrad 82. Das gefederte Zahnrad überträgt die Drehbewegung auf das Zahnrad 84, welches sowohl ein Verschwenken oder Schwenken der zweiten Steuerlamelle 22, als auch eine Übertragung der Drehbewegung auf die Zahnstange 88 bewirkt. Eine Verlagerung der Zahnstange 88 bewirkt ein Verdrehen oder Drehen oder Drehen der zweiten Lamellen 24 über deren direkte Kopplung mit den dritten Zahnrädern 86. Hierdurch wird auf einfache Weise eine Bewegungsübertragung mit einem geringen Bauraum bereitgestellt, welche zudem die Möglichkeit einer Energiespeicherung, die Möglichkeit einer Über- bzw. Untersetzung, die Verhinderung von Verwirbelungen der ausströmenden Luft und den Ausgleich von Toleranzen bereitstellt.

Wie vorstehend für die beispielhaften Ausführungen der Luftausströmer gezeigt (erste Ausführungsform und zweite Ausführungsform), befinden sich die wesentlichen Komponenten der Kinematik zum Verschwenken oder Schwenken der zweiten Lamelle 24 und der zweiten Steuerlamelle 70, nämlich mindestens das erste Verstellelement 26, 80, das erste Zahnrad 28, 82, das zweite Verstellelement 30, das Zahnrad 84 und die Koppelstangen 32 und 34 sowie die Zahnstange 88 außerhalb des Gehäuses 12. Daher erfolgt über diese Komponenten keine Beeinflussung und Ablenkung bzw. Verwirbelung der über den Luftaustrittsbereich 14 ausströmenden Luft im Luftkanal. Ferner muss die zweite Steuerlamelle 22 keinen Ausschnitt oder sonstige konstruktive Merkmale aufweisen, welche eine zusätzliche Verwirbelung der Luft bewirken oder in einer Schließstellung der Lamellen einen Leckluftstrom aufgrund eines Ausschnitts zulassen. Die zweite Steuerlamelle 22 kann innerhalb des Luftkanals genauso ausgebildet sein, wie die restlichen zweiten Lamellen 24. Darüber hinaus weist die erste Steuerlamelle 20 keine Aufnahmen, Führungen oder sonstige Mittel auf, welche ebenfalls entweder den Querschnitt der Steuerlamelle 20 vergrößern oder in Anformungen bzw. Einrichtungen an der ersten Steuerlamelle 20 resultieren würden. Dadurch wird ein verbessertes Verschließen des Luftkanals um die zweiten Lamellen 24 und die zweite Steuerlamelle 22 bereitgestellt, wobei zusätzlich keine Kinematik-Bauteile innerhalb des Luftkanals angeordnet sind.

Durch eine stufenförmige Ausbildung der zweiten Lamellen 24 und der zweiten Steuerlamelle 22 liegen diese nicht nur entlang der Berührungskanten aneinander an, sondern können vorteilhafterweise flächig aneinander anliegen. Hierüber wird das Durchströmen von Leckluft bei einem geschlossenen Luftkanal weiter verhindert. Ferner können in weiteren Ausführungsformen die Anlagekanten oder auch die Anlageflächen mit einem Dichtmittel versehen sein. Beispielsweise eignen sich hierfür Schäume oder um die Lamellen umlaufend angeordnet Dichtringe aus Gummi. Darüber hinaus kann das Gehäuse 12 umlaufende Dichtmittel aufweisen, die bei einer Schließstellung der zweiten Lamellen 24 und der zweiten Steuerlamelle 22 das Gehäuse 12 gegenüber den zweiten Lamellen 24 und der zweiten Steuerlamelle 22 abdichten.

Die gefederte Ausbildung von Komponenten der Luftausströmer 10 erlaubt es Abweichungen in den Maßen der Komponenten auszugleichen. Deswegen kann auf enge Toleranzgrenzen verzichtet werden, was die Kosten der Luftausströmer 10 erheblich reduziert. Dabei wird auch die Menge der Ausschussteile deutlich verringert.

### Bezugszeichenliste

- 10: Luftausströmer
- 12: Gehäuse
- 13: Anschluss
- 14: Luftaustrittsbereich
- 16: Lagersteg
- 18: Bedienelement
- 19: Lagerzapfen
- 20: erste Steuerlamelle
- 22: zweite Steuerlamelle
- 24: zweite Lamelle
- 26: erstes Verstellelement
- 28: erstes Zahnrad
- 30: zweites Verstellelement
- 32: erste Koppelstange
- 34: zweite Koppelstange
- 36: erstes Bedienteil
- 38: zweites Bedienteil
- 40: Lagerzapfen
- 42: Abschnitt
- 44: Koppelelement
- 46: Koppelelement
- 48: Abschnitt
- 50: Koppelfortsatz
- 52: Pfeil
- 54: Pfeil
- 56: erster Steuerabschnitt
- 58: Aufnahme
- 60: Koppelzapfen
- 62: Öffnung
- 64: Koppelstift
- 66: Öffnung
- 68: Pfeil
- 70: Lagerzapfen
- 72: Pfeil
- 74: Pfeil
- 76: erstes Bedienteil
- 78: zweites Bedienteil
- 80: erstes Verstellelement
- 82: Zahnrad
- 84: Zahnrad
- 86: drittes Zahnrad
- 88: Zahnstange
- 90: Steuerwelle
- 92: Aufnahme
- 94: Feder
- 96: Verbindungsstift
- 98: Aufnahme
- 100: Lager
- 102: zweiter Steuerabschnitt
- 104: Lagerzapfen
- 106: Arm
- 108: Zahnkranz
- 110: Lager
- 112: Führungselement
- 113: Führungselement
- 114: Öffnung
- 116: Ausbuchtung

## Patentansprüche

1. Luftausströmer mit einer Einrichtung zum Steuern eines Luftstroms, mit mindestens einer verschwenkbar in einem Gehäuse (12) gelagerten ersten Steuerlamelle (20) und mit orthogonal zur ersten Steuerlamelle (20) verlaufenden und verschwenkbar im Gehäuse (12) gelagerten zweiten Lamellen (24), wobei über die erste Steuerlamelle (20) und die zweiten Lamellen (24) die Richtung des aus dem Gehäuse (12) austretenden Luftstroms und über die zweiten Lamellen (24) die Menge der ausströmenden Luft einstellbar sind, und mit einem Bedienelement (18), das in einem Luftaustrittsbereich (14) des Gehäuses (12) angeordnet ist, wobei
- das Bedienelement (18) um eine parallel zur Schwenkachse der zweiten Lamellen (24) verlaufende Achse verschwenkbar gelagert und mit einem ersten Verstellelement (26; 80) und mit der ersten Steuerlamelle (20) gekoppelt ist,
- das erste Verstellelement (26; 80) ein Zahnsegment aufweist, das mit einem drehbar am Gehäuse (12) gelagerten ersten Zahnrad (28; 82) in Eingriff steht,
- das erste Zahnrad (28; 82) mit einem zweiten Verstellelement (30) in Eingriff steht, das an einer zweiten Steuerlamelle (22) der zweiten Lamellen (24) angeordnet ist,
- die zweite Steuerlamelle (22) über mindestens eine Verbindungsstange mit den anderen zweiten Lamellen (24) gekoppelt ist, und
- das erste Zahnrad (28; 82) gefedert ausgebildet ist.

2. Luftausströmer nach Anspruch 1, wobei das Bedienelement (18) ein erstes Bedienteil (36) und ein zweites Bedienteil (38) aufweist, wobei das erste Bedienteil (36) um eine parallel zur Längsachse (B) der ersten Steuerlamelle (20) verlaufende erste Achse (C) verschwenkbar an einem Lagersteg (16) gelagert und das zweite Bedienteil (38) um eine orthogonal zur ersten Achse (C) verlaufende zweite Achse (D) verdrehbar in dem ersten Bedienteil (36) gelagert ist.

3. Luftausströmer nach Anspruch 2, wobei das erste Verstellelement (26) einen sich orthogonal zum Zahnsegment und entlang der zweiten Achse (D) erstreckenden Abschnitt (42) aufweist, um den das erste Verstellelement (26) drehbar im Gehäuse (12) gelagert ist und der von einem ersten Steuerabschnitt (56) des zweiten Bedienteils (38) umgeben ist.

4. Luftausströmer nach Anspruch 3, wobei das zweite Verstellelement (30) mindestens einen Zahnsegmentabschnitt und zwei exzentrisch zur Schwenkachse (A) der zweiten Steuerlamelle (22) angeordnete und gegenüberliegende Koppelelemente (44, 46) aufweist, wobei die Koppelelemente (44, 46) jeweils mit einer Koppelstange (32, 34) und die Koppelstangen (32, 34) jeweils mit einer Gruppe von zweiten Lamellen (24) verbunden sind.

5. Luftausströmer nach Anspruch 4, wobei die Koppelstangen (32, 34) gekröpfte Abschnitte (48) aufweisen, über welche die Koppelstangen (32, 34) mit den zweiten Lamellen (24) verbunden sind.

6. Luftausströmer nach Anspruch 1, wobei das Bedienelement (18) ein erstes Bedienteil (76) und ein zweites Bedienteil (78) aufweist, wobei das erste Bedienteil (76) um eine parallel zur Längsachse (B) der ersten Steuerlamelle (20) verlaufenden erste Achse (C) verschwenkbar in dem zweiten Bedienteil (78) gelagert und das zweite Bedienteil (78) um eine orthogonal zur ersten Achse (C) verlaufende zweite Achse (D) verschwenkbar an dem Gehäuse (12) gelagert ist.

7. Luftausströmer nach Anspruch 6, wobei das erste Bedienteil (76) über eine Feder (94) in einer Aufnahme (92) in dem zweiten Bedienteil (78) verschwenkbar gelagert ist.

8. Luftausströmer nach Anspruch 6 oder 7, wobei das erste Verstellelement (80) mit dem zweiten Bedienteil (78) verbunden ist und das erste Bedienteil (76) einen zweiten Steuerabschnitt (102) aufweist, der mit der ersten Steuerlamelle (20) gekoppelt ist.

9. Luftausströmer nach einem der Ansprüche 6 bis 8, wobei das zweite Verstellelement ein mit der zweiten Steuerlamelle (22) verbundenes zweites Zahnrad (84) ist, das mit dem ersten Zahnrad (82) in Eingriff steht, wobei die zweiten Lamellen (24) jeweils mit einem dritten Zahnrad (86) verbunden sind, deren Drehachse die Schwenkachse (A) der zweiten Lamellen (24) ist und wobei die dritten Zahnräder (86) mit dem zweiten Zahnrad (84) über eine Zahnstange (88) gekoppelt sind.

10. Luftausströmer nach Anspruch 9, wobei die Zahnstange (88) eine gefederte Zahnstange (88) ist und über Führungselemente (112, 113) am Gehäuse (12) gelagert ist.

11. Luftausströmer nach einem der Ansprüche 1 bis 10, wobei
- die zweiten Lamellen (24) einen Querschnitt mit mindestens einer Abstufung aufweisen,
- die zweiten Lamellen (24) mindestens an ihren parallel zur Schwenkachse (A) verlaufenden Außenkanten eine Dichtung aufweisen, und/oder
- das Gehäuse (12) im Bereich der zweiten Lamellen (24) an inneren Seitenwänden eine Dichtungsanordnung aufweist.

## Claims

1. Air vent with a device for controlling an air flow, comprising at least one first control slat (20) pivotably mounted in a housing (12) and second slats (24) extending orthogonally to the first control slat (20) and pivotably mounted in the housing (12), wherein the direction of the air flow exiting the housing (12) is settable by way of the first control slat (20) and the second slats (24) and the amount of outflowing air is settable by way of the second slats (24), and a control element (18) arranged in an air outlet region (14) of the housing (12), wherein
- the control element (18) is mounted to be pivotable about an axis extending parallel to the pivot axis of the second slat (24) and is coupled with a first adjusting element (26; 80) and with the first control slat (20),
- the first adjusting element (26; 80) comprises a toothed segment disposed in engagement with a first gearwheel (28; 82) rotatably mounted on the housing (12),
- the first gearwheel (28; 82) is disposed in engagement with a second adjusting element (30) arranged at a second control slat (22) of the second slats (24),
- the second control slat (22) is coupled by way of at least one connecting rod with the other second slats (24) and
- the first gearwheel (28; 82) has a sprung configuration.

2. Air vent according to claim 1, wherein the control element (18) comprises a first control part (36) and a second control part (38), wherein the first control part (36) is mounted on a mounting web (16) to be pivotable about a first axis (C) extending parallel to the longitudinal axis (B) of the first control slat (20) and the second control part (38) is mounted in the first control part (36) to be rotatable about a second axis (D) extending orthogonally to the first axis (C).

3. Air vent according to claim 2, wherein the first adjusting element (26) has a section (42), which extends orthogonally to the toothed segment and along the second axis (D) and about which the first adjusting element (26) is rotatably mounted in the housing (12), the section being surrounded by a first control section (56) of the second control part (38).

4. Air vent according to claim 3, wherein the second adjusting element (30) has at least one toothed segment section and two opposite coupling elements (44, 46) arranged eccentrically with respect to the pivot axis (A) of the second control slat (22), wherein the coupling elements (44, 46) are each connected with a coupling rod (32, 34) and the coupling rods (32, 34) are each connected with a respective group of second slats (24).

5. Air vent according to claim 4, wherein the coupling rods (32, 34) have cranked sections (48) by way of which the coupling rods (32, 34) are connected with the second slats (24).

6. Air vent according to claim 1, wherein the control element (18) has a first control part (76) and a second control part (78), wherein the first control part (76) is mounted in the second control part (78) to be pivotable about a first axis (C) extending parallel to the longitudinal axis (B) of the first control slat (20) and the second control part (78) is mounted on the housing (12) to be pivotable about a second axis (D) extending orthogonally to the first axis (C).

7. Air vent according to claim 6, wherein the first control part (76) is pivotably mounted by way of a spring (94) in a receptacle (92) in the second control part (78).

8. Air vent according to claim 6 or 7, wherein the first adjusting element (80) is connected with the second control part (78) and the first control part (76) has a second control section (102) coupled with the first control slat (20).

9. Air vent according to any one of claims 6 to 8, wherein the second adjusting element is a second gearwheel (84), which is connected with the second control slat (22) and disposed in engagement with the first gearwheel (82), wherein the second slats (24) are each connected with a third gearwheel (86), the axis of rotation of which is the pivot axis (A) of the second slats (24), and wherein the third gearwheels (86) are coupled with the second gearwheel (84) by way of a rack (88).

10. Air vent according to claim 9, wherein the rack (88) is a sprung rack (88) and is mounted on the housing (123) by way of guide elements (112, 113).

11. Air vent according to any one of claims 1 to 10, wherein
- the second slats (24) have a cross-section with at least one step,
- the second slats (24) have a seal at least at the outer edges thereof extending parallel to the pivot axis (A) and/or
- the housing (12) has a sealing arrangement in the region of the second slats (24) at inner side walls.

## Revendications

1. Diffuseur d'air avec un dispositif destiné à la commande d'un flux d'air, avec au moins une première lamelle de commande (20) supportée en pivotement dans un boîtier (12) et avec des deuxièmes lamelles (24) placées à angle droit par rapport à la première lamelle de commande (20) et supportées en pivotement dans le boîtier (12), la direction du flux d'air sortant du boîtier (12) pouvant être réglée par le biais de la première lamelle de commande (20) et des deuxièmes lamelles (24), et la quantité de l'air sortant pouvant être réglée par le biais des deuxièmes lamelles (24), et avec un élément de manoeuvre (18) qui est disposé dans une zone de sortie d'air (14) du boîtier (12),
- l'élément de manoeuvre (18) étant supporté en pivotement autour d'un axe placé parallèlement à l'axe de pivotement des deuxièmes lamelles (24) et étant couplé à un premier élément de réglage (26 ; 80) et à la première lamelle de commande (20),
- le premier élément de réglage (26 ; 80) présentant un segment denté qui engrène avec une première roue dentée (28 ; 82) supportée en rotation sur le boîtier (12),
- la première roue dentée (28 ; 82) engrenant avec un deuxième élément de réglage (30) qui est disposé sur une deuxième lamelle de commande (22) des deuxièmes lamelles (24),
- la deuxième lamelle de commande (22) étant couplée aux autres deuxièmes lamelles (24) par le biais d'au moins une tige de raccordement, et
- la première roue dentée (28 ; 82) étant constituée avec un effet de rappel élastique.

2. Diffuseur d'air selon la revendication 1, l'élément de manoeuvre (18) présentant une première partie de manoeuvre (36) et une deuxième partie de manoeuvre (38), la première partie de manoeuvre (36) étant supportée en pivotement sur une nervure de palier (16) autour d'un premier axe (C) placé parallèlement à l'axe longitudinal (B) de la première lamelle de commande (20), et la deuxième partie de manoeuvre (38) étant supportée dans la première partie de manoeuvre (36) en rotation autour d'un deuxième axe (D) placé à angle droit par rapport au premier axe (C).

3. Diffuseur d'air selon la revendication 2, le premier élément de réglage (26) présentant un tronçon (42) s'étendant à angle droit par rapport au segment denté et le long du deuxième axe (D), tronçon autour duquel le premier élément de réglage (26) est supporté en rotation dans le boîtier (12) et qui est entouré par un premier tronçon de commande (56) de la deuxième partie de manoeuvre (38).

4. Diffuseur d'air selon la revendication 3, le deuxième élément de réglage (30) présentant au moins un tronçon de segment denté et deux éléments de couplage (44, 46) opposés et disposés de façon excentrée par rapport à l'axe de pivotement (A) de la deuxième lamelle de commande (22), les éléments de couplage (44, 46) étant respectivement raccordés à une tige d'accouplement (32, 34), et les tiges d'accouplement (32, 34) étant respectivement raccordées à un groupe de deuxièmes lamelles (24).

5. Diffuseur d'air selon la revendication 4, les tiges d'accouplement (32, 34) présentant des tronçons (48) coudés par le biais desquels les tiges d'accouplement (32, 34) sont raccordées aux deuxièmes lamelles (24).

6. Diffuseur d'air selon la revendication 1, l'élément de manoeuvre (18) présentant une première partie de manoeuvre (76) et une deuxième partie de manoeuvre (78), la première partie de manoeuvre (76) étant supportée en pivotement dans la deuxième partie de manoeuvre (78) autour d'un premier axe (C) placé parallèlement à l'axe longitudinal (B) de la première lamelle de commande (20), et la deuxième partie de manoeuvre (78) étant supportée sur le boîtier (12) en pivotement autour d'un deuxième axe (D) placé à angle droit par rapport au premier axe (C).

7. Diffuseur d'air selon la revendication 6, la première partie de manoeuvre (76) étant supportée en pivotement par le biais d'un ressort (94) dans un logement (92) dans la deuxième partie de manoeuvre (78).

8. Diffuseur d'air selon la revendication 6 ou 7, le premier élément de réglage (80) étant raccordé à la deuxième partie de manoeuvre (78), et la première partie de manoeuvre (76) présentant un deuxième tronçon de commande (102) qui est couplé à la première lamelle de commande (20).

9. Diffuseur d'air selon l'une des revendications 6 à 8, le deuxième élément de réglage étant une deuxième roue dentée (84), raccordée à la deuxième lamelle de commande (22), qui engrène avec la première roue dentée (82), les deuxièmes lamelles (24) étant respectivement raccordées à une troisième roue dentée (86) dont l'axe de rotation est l'axe de pivotement (A) des deuxièmes lamelles (24), et les troisièmes roues dentées (86) étant couplées à la deuxième roue dentée (84) par le biais d'une crémaillère (88).

10. Diffuseur d'air selon la revendication 9, la crémaillère (88) étant une crémaillère (88) à effet de rappel élastique et étant supportée sur le boîtier (12) par le biais d'éléments de guidage (112, 113).

11. Diffuseur d'air selon l'une des revendications 1 à 10,
- les deuxièmes lamelles (24) présentant une section transversale avec au moins une gradation,
- les deuxièmes lamelles (24) présentant un joint d'étanchéité au moins sur leurs arêtes extérieures placées parallèlement à l'axe de pivotement (A), et/ou
- le boîtier (12) présentant dans la zone des deuxièmes lamelles (24) un ensemble d'étanchéité sur des parois intérieures.
